# EUROPEAN PATENT SPECIFICATION

(11) **EP 4 195 910 B1**
(45) Date of publication and mention of the grant of the patent: **03.09.2025**
(21) Application number: 21751814.1
(22) Date of filing: 29.07.2021
(51) Int. Cl.: A01G 31/06, A01G 9/14, A01G 9/24

(54) **A HOOD FOR FARMING SYSTEM**
HAUBE FÜR LANDWIRTSCHAFTSSYSTEM
HOTTE POUR SYSTÈME AGRICOLE

(30) Priority: 13.08.2020 GB 202012672; 13.08.2020 GB 202012673; 13.08.2020 GB 202012675
(43) Date of publication of application: 21.06.2023
(73) Proprietor: Ocado Innovation Limited, Hatfield, Hertfordshire AL10 9UL (GB)
(72) Inventor: STADIE, Robert, HATFIELD Hertfordshire AL10 9UL (GB)
(74) Representative: Ocado Group IP Department
(86) International application number: PCT/EP2021/071304
(87) International publication number: WO 2022/033889

(56) References cited:
- WO-A1-2020/098890
- US-A- 6 134 831
- US-B2- 9 433 158

## Description

### Field of the invention

The invention relates to a hood for a farming system growing floor booth.

More specifically the invention relates to indoor farming techniques. In some arrangements the indoor farming system may be laid-out over multiple levels as a vertical farm.

### Background and related art

Conventional systems and methods for growing crops are well known. Most require large areas of land and need to be positioned in appropriate locations for the conditions required for the crops to be grown. Indoor farming under artificial lights is gaining popularity for a large number of crops. More recently, advanced farming techniques such as hydroponics, aeroponics and other such cultivation systems have led to the ability to grow high quality crops indoors with very high utilisation of lighting, water and fertiliser. These systems have however been less efficient in terms of land use, capital and labour.

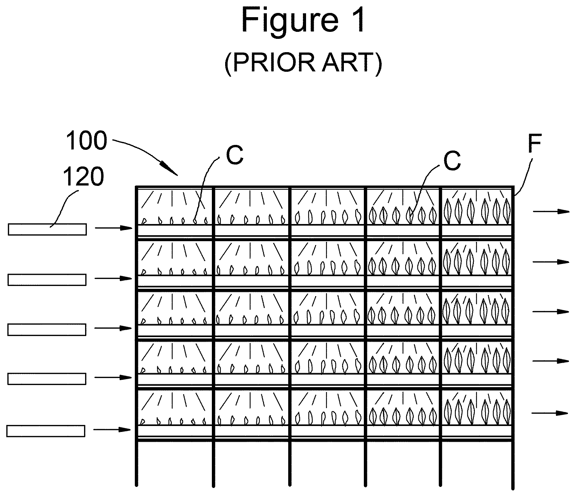

An example of an indoor farm is disclosed in WO2020030825 A1 "HYDROPONICS growing system AND METHOD" (Ocado Innovations Ltd.), the contents of which are incorporated herein by reference. WO'825 describes an apparatus (100) for use in a hydroponic growing system is described. The apparatus comprises a frame (F) of vertical members and horizontal members supporting horizontal tracks or guideways on which a set of growing vehicles (120) are mounted. The growing vehicles each contain a number of growing trays in which plants or crops (C) are accommodated whilst they grow. The apparatus (100) is located within a high care facility within the hydroponic growing system, Fig. 1.

In WO'825, the size of the facility is limited by the size of the building and frame within it. However, it is not possible to control the temperature, humidity and wind speed for each growing tray. Accordingly, typically the same crop or type of crop is grown in each track. Further, it is not possible to access all of the growing trays, instead it is only possible to access trays sequentially from each track or guideway. Still further, mechanical failure of a track may render a large portion of the facility inaccessible until it is repaired.

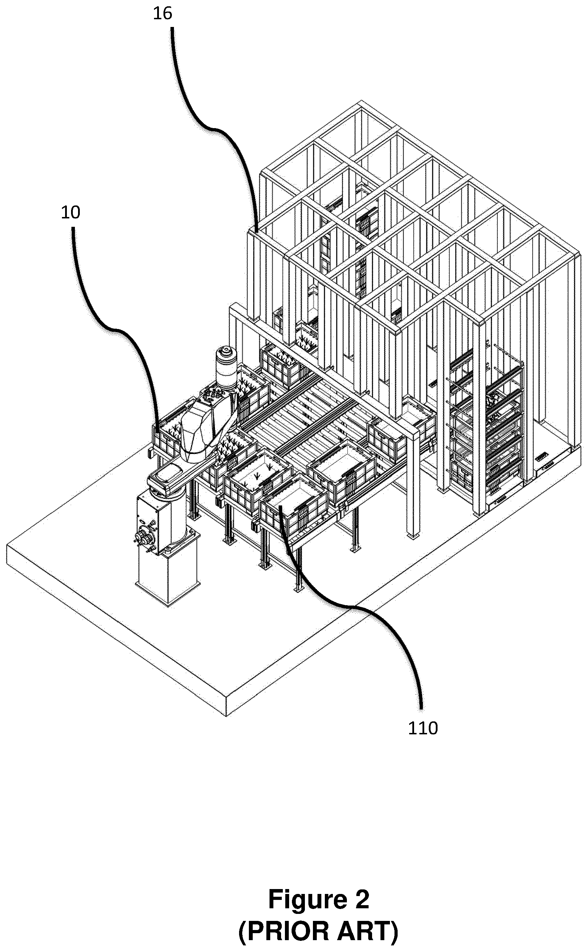

Some commercial and industrial activities require systems that enable the storage and retrieval of a large number of different products. Another example of an indoor farm is disclosed in WO2018050816A1 "Growing Systems And Methods" (Ocado Innovations Ltd.), the contents of which are incorporated herein by reference. WO'816 describes a growing system where plants are grown in containers 110, and the containers are stored in stacks. Above the stacks, load handling devices run on a grid network of tracks 16 and take containers from the stacks and deposit them at alternative locations in the stacks or at work stations 10. The containers are provided with services and deployable lighting means. The provision of these such lighting means within individual containers rather than across the system as a whole, allows for flexibility in storage whilst reducing cost and inefficiency and enables multiple crops to be grown in a single area, Fig. 2.

In WO'816 any container may be accessed and processed at a work station, however, it may be inefficient to access some containers, for example, those located at the bottom of a stack. As the growing conditions are controllable for each container, the facility can accommodate a number of different crops and living organism. However, each container must interface with the system to control and receive services, which may be complex. Further, in a high density storage arrangement it may be difficult to achieve the necessary air flow through the system to avoid problems like condensation and mould.

WO2020098890A1 discloses a growth house comprising a housing defining an inner space. The inner space is provided with a storage structure comprising several vertically displaced storage levels. Each storage level comprises a support structure configured to receive a tray member with plants. Each support structure comprises a plurality of light sources distributed to emit light towards the subjacent tray member.

US9433158B2 discloses a plant cultivation system.

US6134831A discloses a sprout cultivation box with an automatic water regulating and balancing device.

The present invention aims to further develop the storage and growing systems and methods of crops and or growing living organisms. Living organisms is understood to include all Eukaryota (Plantae, Fungi, Animalia), that is, all multicellular plants, fungi and animals; and all Prokaryota (Bacteria, Archaea, Protozoa, Chromista), that is, all unicellular microorganisms such as protists, bacteria, and archaea

It will be appreciate that the present invention aims to maximise the yield, improve efficiency in terms of use of assets, resources and services required by the crop. For example, but not limited to efficiencies, may comprise: reduced needs for water; reduced needs for fertilisers and pesticides; increase in the control of taste; increase in the control texture and other features of the crop; efficiencies in the use of artificial lighting; efficiencies in maintenance of the facilities; improved utilisation of space, improved safety, an increase in automation and corresponding decrease in labour.

Furthermore, the benefits from controlled environment, indoor and or vertical farming systems are likely to become more pronounced as improved infrastructure components such as more efficient and cheaper lights, and cheaper electricity become available.

The present disclosure describes systems, methods and devices for improving the efficiency of these types of techniques.

### Statement of the invention

Aspects of the invention are set out in the accompanying claims.

### System

A farming system is provided, comprising a growing facility, wherein the growing facility comprises: at least one growing floor comprising a track network, based on a grid system, the track network comprising a first set of track members extending in a first (x-) direction, and a second set of track members extending in a second (y-) direction, the second set of track members running transversely to the first set of track members in a substantially horizontal plane, wherein the track network comprises access aisles and growing aisles, wherein the growing aisles comprise one or more booths for receiving growing trays; and at least one load handling device operating on the track network for lifting and transporting growing trays.

A booth may comprise a support means for supporting a growing tray, and a hood for providing services to the growing trays.

A growing space is arranged over a growing floor or level. Growing trays are positioned on support means within the growing space. Support means may comprise one or more trestles optionally at least two trestles. Typically, growing trays are located individually i.e. not stacked in booths where they are stored during different phases of the living organism or crop being grown in the farming system. In other words, together, the trestles and growing trays are akin to a shelving system.

Growing trays are moved around the system by load handling devices or bots. The load handling devices may be semi-automated or fully automated. The trestles or supports are sized and arranged such that the load handling devices may pass between them, travelling on the network of tracks or track network. Further, the trestles are of a height such that when a growing tray is supported by the trestles, an unloaded load handling device may pass under the growing tray.

The track network is arranged with a number of access aisles, which are typically free of trestles, and a number of growing aisles which are equipped with trestles to provide locations for growing tray storage. Off the growing aisles, there may be a number of side-aisles for accessing further storage locations. Storage locations, or booths, are typically provided with a hood. Growing aisles or side-aisles are one or more booths deep. Typically, side-aisles are between 2 and 6 booths deep. A plurality of growing aisles may be connected by access aisles located at each end of the growing aisles.

The track network, and accordingly storage locations, are arranged on a grid system to efficiently make use of the available space and maximise the capacity of the system or facility. Each grid unit may be considered as a 'reservable location'. A reservable location may be a single grid unit, or a reservable location may be a number of adjacent grid units, for example, a length of track or pathway. In some instances a reservable length of track may be a single unit, and in other instances some of the same unit tracks may be reservable, independently of each other. A reservation for a reservable location may have a start time and an end time. In this way, whether or not a grid unit is reserved will change over time. Reservable locations may be reserved for specific growing tray and or load handling devices. Every location within the system may be reservable. Over time, each reservable location may have several non-overlapping reservations which may be for the same or different load handling devices and or growing trays. Reservations for reservable locations may be held in a reservable location table. It will be appreciated that the load handling device navigation system and controller may support variable length reservable locations. In each variable length reservable location there may be at most one position where the load handling device can change its direction of travel to the orthogonal direction on the track network. In this way, locations of the grid system may be managed by a control facility, which will be described in more detail below.

Typically, tracks comprise troughs, rails, guideways or any other suitable structure for receiving or engaging with the wheels of a load handling device. Troughs, rails or guideways may be in pairs for each track pathway. The tracks provide pathways for the load handling device(s). It will be appreciated that some grid spaces may be without tracks to accommodate features of the building structure such as support columns which extend through the building and floor. The track network may be made up of any number of first and second members. The first and second track members are arranged substantially orthogonally, following a grid pattern. The floor is substantially flat and level and the tracks are arranged substantially in a horizontal plane.

Each location within the system may comprise a single grid unit, or locations may comprise an integer number of grid units. Tracks may be a single grid unit wide. Typically, each grid unit may comprise a track in an x-direction, and a track in a y-direction. Typically booths and other features of the system may comprise a single grid unit.

At each booth location, a hood is located above the tray support trestles and provides at least some of the services required by the living organisms for growing and maturing into a crop. The services provided may be specific to the living organism, and may vary over time depending on the needs of the living organism. In this way, the conditions for the living organism may be optimised at any particular time. The hood may be substantially static, or the hood may be movable.

When being transported by a load handling device the growing tray is supported by a support pad located on the upper surface of the load handling device. It will be appreciated that the support pad is arranged subsntially in a horizontal plane. The support pad may be raised and lowered by the load handling device so that growing trays may be lifted clear of trestles arranged along the pathway of the load handling device, so that the trestles do not impede movement of the growing trays. Thus, the support pad lifts and lowers the growing trays from below or underneath. Typically, load handling devices travel with the support pad lowered for stability. Typically, when a load handling device arrives at a location adjacent to the destination location (such as a booth), the load handling device raises the support pad. The load handling device then moves into position to deposit the growing tray. When the load handling device is in position between the trestles of the destination location, the support pad is lowered and the growing tray is supported by a pair of trestles at each end. The load handling device can then move on from the booth location along the track network to carry out another load handling task. Typically, load handling devices travel between the growing aisles on the same floor by using the access aisles.

The track network may comprise one or more temporary storage locations comprising support means for supporting a growing tray. The track network may further comprise one or more of: a charging bay; a passing lane; a siding; a lay-by; and or a passing point.

The layout of the floor, or track network, will typically comprise additional features for efficient operation of the system. For example, the access aisles may be two pairs of tracks wide. The inner pair of tracks (for example, closest to the growing aisles) provides the notional main pathway or highway for load handling device traffic. The outer pair of tracks (for example, furthest from the growing aisles) may provide the location(s) for other features of the network.

For example, lay-bys may be for automated recovery of failed or damaged load handling devices, or for operators to access load handling devices, or for placing failed load handling devices pending repair *in situ* or removal to the maintenance area. Passing points may allow for load handling devices travelling in the opposite directions on the same inner-track path to pass. Further, the track network may comprise locations for other ancillary functions for the system to operate.

Load handling device charging locations or charging points may comprise inductive charging pads arranged between the tracks that inductively transfer energy to a load handling device via interrelated charging pads on the underside of the load handling device. Typically load handling device charging locations may be located where load handling devices tend to spend a period of time. For example, a charging location may also comprise: a waiting location adjacent to a lift, for charging the load handling device while the load handling device waits for the next available lift-car to transfer to another level; locations at workstations, where the load handling device may remain while a growing tray is being processed; a queuing location for workstations, where the load handling device waits until a workstation position becomes available; one or more locations along access aisles. It will be appreciated that there may be at least one charging location on each growing floor.

Adjacent tracks may be sized to allow two load handling devices, loaded with growing trays, to pass on adjacent tracks with sufficient space for adequate tolerances and to avoid collisions.

Temporary storage locations may differ from booth locations in that they may not comprise a hood, instead comprising a pair of trestles for temporarily storing a growing tray without one or more other features of a booth. Temporary storage locations may be locations that have trestles but are not growing booths. Temporary storage locations may be used for growing trays temporarily removed from a side-aisle to access growing trays deeper in the side-aisle. In use, for example, growing trays located in an aisle which are several booths deep may be moved to a temporary storage location in order to access a growing tray that is located several grid units away from an access aisle.

If the load handling device is carrying a growing tray these temporary storage locations can only be accessed when the load handling device's load pad is in the up state to avoid colliding with the trestles. Typically temporary storage locations would not be used at locations where load handling device through traffic is anticipated.

There may be specific aisles specially configured physically and environmentally for the germination of the seeds. These specialist aisles may be referred to as germination aisles.

There may be specific aisles specially configured physically and environmentally to provide the typically cold condition required for stratification aisles. In horticulture, seed stratification refers to the providing seeds to create the environmental conditions that the seeds must experience before germination can occur. Seeds of some crop species grown have a dormancy phase, and will not sprout until the seeds experience a minimum temperature for a minimum number of days. These specialist aisles are referred to as cold stratification aisles.

Should perennial plants that need to experience a cold period before bearing fruit in the following season or simulated season be grown in the growing system, they could be provided the required cold environment in a cold stratification aisle. These aisles may differ from cold stratification aisles configured for seeds and germination by comprising more headroom above the growing trays.

Cold stratification aisles may be subdivided into one or more chambers or galleries, where each chamber is configured to accommodate either seeds or plants. Some aisles may be arranged to accommodate plants requiring specific minimum height to accommodate the plants and or a growing frame.

Further, the floor layout may comprise storage aisles comprising trestles, similarly to temporary storage locations on access aisle. These aisles may be used to store unused growing trays and or other equipment, for example.

The floor may be divided by partitioning means into chambers, and the partitioning means have opening or hatches through which load handling devices may pass. The partitioning means may comprise a fire break means AND OR wherein the partitioning means provide segregation between user access and robotic access within the system.

Partitioning means may comprise partition walls. The growing aisles may be subdivided into chambers or galleries, for example. Typically galleries would be used when the environmental range of the crops life cycle cannot be supported with the same section of the aisle. The partition walls may comprise environmentally controlling doors. This may allow each gallery or chamber to have its own unique target ambient air temperature, unique target ambient air humidity, and unique target ambient wind speed, for example.

The system may further comprise a fire detection system. The system may further comprise a fire suppression system, for example comprising a sprinkler system. The system may further comprise a smoke detection system. The system may further comprise a heat detection system. Each of the fire safety systems may comprise network connections to the control facility. Partitioning walls may provide the opportunity within dense storage areas to contain and or suppress the spread of fire.

The farming system may further comprise two or more vertically arranged floors, wherein floors are interconnected by a one or more lifts accessible from access aisles for transferring load handling devices between floors; and wherein floors comprise: at least one growing floor, and OPTIONALLY one or more sky-lobby floors for transferring between lifts.

The farming system may be extended to cover more than one floor. For example, the system may occupy several floors in a building. In a vertical direction, it will be understood that there will be a gap between the growing try and the hood, and another between the hood and the adjacent-above floor. In order to achieve continuity between the floors or levels, the load handling devices or load handling devices may travel between different levels in specifically designed lifts. The lifts may transport the load handling devices with or without a growing tray on the load handling device's tray support pad.

In a multi-storey system, different floors may be reserved for different phases of a living organism life cycle, for example seeding and germination, growing phases, and or harvesting. In a multi-store system, different floors may be reserved for different activities or functions, for example, growing phase storage, processing and or work stations may each be located on different levels, or floors may be portioned to have different areas for different purposes.

Each storey or floor may be served by one or more lifts. Typically, the lifts may be bi-directional lifts i.e. able to travel up or down. Lifts may be located directly or indirectly to access aisles. The floor or a lift-car may be have tracks to allow load handling devices to travel directly into the lift from the growing floor. Lift-cars may be sized to accommodate one load handling device loaded with a growing tray, or lift-cars may be sized to accommodate more than one load handling device/growing tray arrangements.

Typically, there are at least two bi-directional lifts with access to each floor to provide resiliency in the case of a lift failure.

In some arrangements, lifts may be double-decked comprising stacked lift-cars, simultaneously serving adjacent floors and capable carrying two load handling devices, to produce higher lift throughputs. For the double-decked lift car the two load handling devices may be collected or deposited at different levels during the lift's travel, producing higher average lift throughputs.

Some levels or floors of a multi-storey system may comprise a sky-lobby, where load handling devices can transit on track pathways between lift systems. For systems without a sky-lobby the lift(s) may stop at each growing floor, or processing floor. In some systems, the lift(s) may stop at selected floors or levels. For example, some lifts may only serve lower floors in the system while other lifts sever upper floors. Or some lifts may be reserved for particular destinations. Typically, sky-lobby arrangements may be found in tall buildings where a single lift system is not feasible due structural limitations of tall buildings. For systems with one or more sky-lobby the lifts may provide access to a contiguous block of floors. In some systems there may be at least two sky-lobby floors providing access to the same levels in the building, to provide resilience to the system in the event of a load handling device failure blocking the reservable track locations at the entrance/exit of the lift-car at a particular level.

For very tall vertical farms, with many levels or floors, the vertical pathway between the lowest floor and the highest floor may require transit via several lifts or lift systems. Transfer from one lift system to another may be via transfer aisle pathway on a sky-lobby floor. Sky-lobby floors may be a growing floor as well as a floor for transferring between lift systems. Or sky-lobby floors may be solely a transfer floor.

Workstations required in sequential order for processing crops may be arranged on the same floor, or the workstations may be arranged on adjacent floor levels to minimise lift-car requirements.

It will be appreciated that levels or floors of the farming system do not necessarily need to correspond to the floors of a building within which the farming system is located. For example, several farming system floors may be located within a single story warehouse type building, having constructions within the space to create the farming system floors.

The farming system may further comprise one or more of: a control facility; environmental control facility means; safety systems; data collection means; data communication means; and communication systems.

Environmental control facilities may comprise global or relatively large scale environmental control systems for growing floors or parts of floors - large scale compared with the environmental control provided by hoods or service hoods on a relatively small scale for individual growing trays. For example, growing aisles may comprise fans to ensure airflow along the aisles. Or fans may be located elsewhere in the system. Air control systems may control the temperature and or humidity of the air. Large scale environmental control may comprise control of lighting intensity and wavelength, although more typically lighting will be controlled for individual growing trays and crops by the hoods.

Each floor may comprise a maintenance area. The maintenance area may comprise a mezzanine level above at least a portion of the booths for providing access to hoods.

The maintenance area, or maintenance areas, may comprise: power connections; fluid ingress connections; fluid egress connections; data connections; data carriers, such as cables; services for connecting to hoods; sensing means for detecting temperature, air flow speed and direction, and or humidity; communication means for communicating data to a central control facility and receiving control instructions.

Further, maintenance areas may be accessible by an operator. Operators or technicians may be able to replace components of the system from maintenance areas. Some maintenance areas may comprise crawl spaces or cable ducts.

Maintenance areas may be arranged in voids between partition walls. Such voids may provide route for service feeds for example, irrigation fluid feeds and filtration, power for the lighting, power for the mechanism that lowers the irrigation pipes into the header and sump pools, network cabling and ports for sensors and cameras. Partitioning means may comprise temporary barriers to provide safe areas for technicians to work.

Growing floors and or growing aisles may be interleaved with maintenance areas. In other arrangements growing aisles may be arranged side-by-side or back-to-back, providing load handing devices to move directly between growing aisles (rather than via access aisles) on the track network, particularly, for example when travelling without carrying a growing tray.

Maintenance areas may comprise cable ways, for example, suspended from the ceiling. Cable ways may be used practically where growing floors are not interleaved with maintenance levels.

The farming system may further comprise: one or more work-stations, OPTIONALLY, wherein each workstation comprises a RFID reader, a scanner or a camera for reading an identity tag or label of a growing tray.

The one or more workstations may be suitable for an operator, or the one or more workstations may be automated, or semi-automated. In this way, at least a part of the system is a goods-to-man system. Growing trays may be transported to or through workstations on a load handling device.

The growing trays may remain on the load handling device while at a workstation, or the growing trays may be deposited by the load handling device on a pair or set of trestles at a workstation.

Workstations are for carrying out processes on crops. Workstations within the system may comprise one or more of: a cleaning and sterilisation workstation, for cleaning growing trays after a crop has been harvested and or otherwise removed from the growing tray such growing trays may be re-used or re-circulated within the system; a growing medium insertion workstation, for inserting growing medium into growing trays in preparation for receiving a crop; a planting workstation, for planting seeds or plug plants; a plug creation workstation, where seedlings are separated and prepared as plug plants; a plant support framework fitting and or removal workstation, for fitting a plant support to a growing tray, which may be required by some plants during some stages of their life-cycle; a harvesting workstation, for harvesting the crop.

Harvesting workstations may be for a variety of crops, or harvesting work stations may be specifically designed for particular crops or particular groups or ranges of crops. Harvesting workstations may further comprising bagging and labelling crops.

One or more specific workstations may be combined into a single work station. For example combined work stations may comprise: a combined cleaning, sterilisation growing medium insertion workstation, where different tasks or functions can be carried out at the same workstation; a combined cleaning, sterilisation, growing medium insertion and planting workstation

Each growing tray processing workstation may have the capability to read the growing tray's identity tag or label prior to processing the growing tray. In this way the controller can confirm the correct growing tray is being handled at each stage; and take corrective action if the correct growing tray is not being processed at any stage.

Further, and similarly to the workstations, the system may comprise a crop growth monitoring station. Growing trays may be transported to by load handling devices to a growth monitoring station. At the growth monitoring station, the crop would be surveyed and appraised.

Within the farming system, different types of work station may be located on a single floor or within a specific area of a floor, or work stations may be distributed on growing floors and or sky lobby floors.

The farming system may comprise ancillary functions.

It will be appreciated that the farming system may further comprise ancillary spaces and ancillary functionality. For example, the farming system may include a stratification area, a germination area, a seeding area, a dedicated harvest area, machine-to-person workstations, growing tray cleaning stations, load handling device service and maintenance stations and planting workstations.

### Hood

A hood for a farming system growing floor booth is provided. The hood is positionable substantially above a support means for receiving a growing tray, the hood comprises:
a lighting means; a fluid outlet for providing irrigation to a growing tray; and a fluid inlet for receiving re-circulated fluid from a growing tray.

The fluid outlet is configured to be raised and lowered with a mechanism, AND wherein the fluid inlet is configured to be raised and lowered with a mechanism. The mechanism may be a servomechanism.

The hood may further comprise: a sensing means; a camera means; a control facility; communication means for receiving commands and or transmitting data; and or connecting means for connecting to: fluid channels, data channels and or a power supply.

The lighting means may comprise frequency controllable energy efficient lighting means.

The fluid inlet may comprise a filtration and recirculation means.

The hood may be substantially static and set at a height depend on an intended crop in a growing tray.

The hood may be accessible from a maintenance area.

Hoods are positioned in booth locations above trestles or support means such that the hood may serve a growing tray when the growing tray is positioned on the trestles.

The hood may comprise a mounting plate for an array of light emitting devices. The mounting plate may be cooled, for example, by passing a coolant through a series of internal channels with a recirculation pump. The coolant temperature may be monitored and controlled, wherein if the coolant reaches a specified temperature the equipment extracts the heat from the coolant. The light devices may be controlled individually, as a group per hood, or as a group more widely within the framing system.

The hood may comprise an arm on which the hood fluid outlet is mounted, for fluid ingress to the tray. The arm may be raised and lowered into a header pool of a growing tray, for example by a servo actuator mechanism. The hood may comprise an arm on which the hood fluid inlet is mounted, for fluid egress from the tray. The arm may be raised and lowered into a sump pool of a growing tray, for example by a servo actuator mechanism. The hood fluid outlet and the hood fluid inlet may be mounted or supported on the same arm, or the fluid outlet and the fluid may be supported by their own respective arms.

In this way, the fluid outlet may connect with a fluid ingress of a growing tray, and the fluid inlet may connect with a fluid egress of a growing tray. The fluid may be a nutrient balanced fluid for providing a crop with food and water. The egress irrigation fluid flow may be maintained by a "self-priming" pump. The self-priming pump may operate with an air/fluid mixture at the infeed of the pump. Fluid which has been returned from a growth tray may then be filtered and recirculated into a fluid system.

Each hood provides one or more services for enabling or supporting growth of a crop in a growing tray. Some hoods may provide a specific set of services for a specific crop. Some hoods may provide a selectable set of services. The services provided may vary over time as a crop develops or grows.

Typically, the sensing means may be digital sensors. The sensors may be mounted on the inlet and or outlet support arms. The end of the support arm(s) may be immersed in the growing tray header and or sump pools. The sensing capability may comprise means for sensing: air humidity, wind speed, air temperature, and fluid depth within the header pool and or sump pool of the growing tray. In this way the environmental conditions of each growing tray may be monitored. Further sensors may be mounted on the hood , such as camera means, and light detectors for viewing the growing tray and measuring the spectrum of light reflected and or re-radiated from the crop. The light detectors may be shielded from receiving light directly from the array of light emitting devices.

As noted above, more detailed analysis of the crop may be carried out at a growth monitoring station, which may comprise relatively more sophisticated sensors than is practical or economic to fit to the hood in each booth or at other locations within the system. Growth monitoring stations may collate data about crops to be used by a control facility.

The control facility of the hood may be responsible for the local environment of a growing tray located in the booth. The control facility may control: fluid irrigation, control fluid temperature, timing of irrigation, ebb-and-flow within the growing tray and chemical composition of the fluid; lighting, intensity, frequency and duration; movement of the support arms; air temperature, both of the air reaching the leaves and stems, and of the roots.

The hood control facility may be controlled by a central control facility, where the hood receives commands via data channels or communication means, or the hood may be controlled by the local control facility acting semi- or fully- autonomously. Hoods may be controlled individually, or groups of hoods may be controlled in a cohort.

Hoods may be substantially statically mounted or fixed, the hoods may be movable or mechanically adjustable, or hoods may be automatically adjustable by the control facility. Hoods may be height adjustable, so that different crops or crops at different stages of their life-cycle may be accommodated beneath the hoods. Typically a hood is positioned above each growing tray position. The height of the growing hoods above the growing trays may be set to a different height in each gallery, for example.

The growing hood mounting fixtures may provide a manual adjustment of the growing hood height above the growing tray. Alternatively one or more servo actuators may provide a mechanism for the controller to adjust the growing hood height above a growing tray. The hood height may be adjusted automatically based on a crop in the growing tray below. The required height may be determined based on a pre-calculated schedule and or feedback from the system.

### Growing Trays

A growing tray for growing a crop in a farming system having booths is provided. The growing tray may comprise: a header pool for receiving fluid ingress from a hood; and a sump pool from which a pump may egress fluid to a hood.

Growing trays may have the same surface area as a 20 foot shipping container which is approximately 6.1 m (twenty feet long) and approximately 2.44 m (8 feet) wide. Growing trays may be smaller so that they are suitably sized to be processed by an individual working at a workstation. Growing trays may comprise a header pool and a sump pool. Growing trays may comprise an ebb-and-flow tray.

In ebb-and-flow hydroponic systems, crops are grown in trays, or pots in trays, that are filled with an inert medium hosting the roots. Typically, ebb-and-flow hydroponics systems operate cyclically between two phases. In the first flood phase an inert growth medium is periodically flooded for a period of typically 5 to 15 minutes, with a nutrient solution. The nutrient rich and aerated irrigation fluid provides both nutrition and oxygen to a plant's roots. The second phase is a draining phase where the irrigation solution ebbs away and plants are given a set amount of time to drain, and the roots absorb oxygen. During this phase the growth medium acts as a temporary reservoir of irrigation fluid to keep the roots moist.

Ebb and flow hydroponics systems are also referred to as flood and drain systems.

A growing tray may comprise a liner for supporting a growth medium. The height of the liner in the tray may be adjustable. The height of the liner may be adjusted by a screw jack, or wherein the height of the liner may be adjusted by a scissor jack.

The growth medium for may be mineral wool, baked clay pellets, glass growstones, coconut coir, perlite pebbles, vermiculite pebbles, pumice pebbles, wood fiber, sheep wool; or a mix of these and/or similar substances.

The growing tray liner fits to or inside the upper surface of the growing tray, and may be supported on pads. The growing tray liner design may be specific for specific crops grown from seeds which will be replanted as plugs, specific for seedlings, specific for particular crops or generic. Accordingly, a standard growing tray may be adaptable for particular crops using interchangeable crop specific tray liners. A growing tray liner may be divided into sub-portions or sub trays which may be processed individually at workstations.

A liner may comprise a dry sump, header tank and sump tank. The header tank and the sump tank may correspond to the header pool and sump pool of the growing tray, or the header tank and sump tank may be solely provided by the liner where the growing tray has a substantially flat surface. It will be appreciated that there is no coupling between the growing tray/liner and hood. Instead the fluid irrigation pipes of the hood each may be terminated with a respective basket, and the baskets simply rest in the on the bottom of the header pool, and respectively the bottom of the sump pool. The liner provides a relatively large growing area or deck.

The growing tray and/or liner may be of design specifically to support the ebb and flow hydroponics.

The growing tray and/or liner design specifically to support the ebb and flow hydroponics may comprise a dry sump, and a sump tank. The sump tank may correspond to the sump pool of the growing tray, or the sump tank may be solely provided by the liner where the growing tray has a substantially flat surface. In this arrangement, a single pipe may be used to fill and empty the sump tank. The pipe may be connected to a pump that can both empty and fill the sump tank i.e. a header thank is not provided and the sump tank acts as both header and sump. More typically the pipe may be connected via a valve which connects the pipe to a pump that supplies fresh nutrient solution for the flood cycle and connect the pipe to a pump that returns the nutrient solution to a reservoir during the drain cycle. The growing tray and/or liner provides a relatively large growing area or deck on which the inert growing medium is placed. Alternatively a tray or trays containing pots filled with inert growing medium are placed on the growing area. The large growing area of the liner or growing tray gently slopes downwards to the sump allowing the inert growing medium to drain into the sump during the drain cycle.Liners may be manufactured as a mounding, composite fabrication or by additive technique as a single component.

In some cases, the liner may be mounted to the growing tray on fixed supports or pads, providing a 'standard' deck height. A standard deck height may be used for regularly grown large volume crops. Standard deck height liner/growing trays may be used together with fixed height hoods. Standard deck height liner/growing trays may be simpler than adjustable height liner/growing trays and have relatively lower costs, accordingly. Similarly, fixed height hoods may have a lower capital cost. Further, a fixed height arrangement may allow crops to be grown in ideal conditions.

The growing tray liner design may be different for crops grown from seeds which will be initially cultivated in cold stratification aisles and or germination aisles before being replanted as plugs or seedlings in the standard growing trays. The growing tray liner may support several sub-trays which are processed individually by the plug creation workstation.

Adjustable height liners may be supported by jacks between the growing tray and liner in place of support pads. For example the liner may be supported by two or four coordinated screw jacks, two scissor jacks or one or more hydraulic rams. The adjustable height mechanism of a liner may be driven by a mechanism of a supporting load handling device.

Liners/growing trays with adjustable deck height may be required or preferable for crops where optimal growing conditions cannot be achieved with the standard (fixed) deck height growing trays and configured range of hood heights in the production growing aisles. For example, for lower volume crops it may be not economical to provide trays/booths with standard optimal conditions.

To maintain optimal conditions during the life-cycle of a crop, it may be necessary to adjust the separation between deck and hood lights while the crop is growing. Adjusting the deck height may be more efficient than adjusting the hood height or moving the growing tray to an alternative booth location or chamber with a different hood height.

Between the liner deck and sides of the growing tray, there may be a lip. The lip may provide some air-flow protection to the crop. Accordingly, by adjusting the liner height, the depth of lip is adjustable and the exposure of the crop to air-flow may be adjusted or fine-tuned.

In some cases, deck height adjustment may be used to determine optimal growing conditions. On a relatively small scale it may be more efficient to adjust deck height in order to experiment and or confirm optimal heights for setting hoods.

In some cases, it may not be possible to adjust hood height without emptying and or closing the aisle where the hood is located. Deck height adjustment may be used to suitably accommodate growing trays until hood adjustment is possible. This may be particularly important in systems where a large range of crops are grown.

It will be understood that growing trays with an adjustable deck height may be taller than the growing trays with the standard (fixed) deck height to accommodate the adjustment range of the deck height.

For trays with adjustable deck height, the adjustment may be performed: at tray creation or planting workstations; at a dedicated deck height adjustment workstation; by a load handling device, whilst on the tray is supported by trestles using an adjuster key deployable through the tray support pad; or by a task specific bot designed to operate the deck height adjuster mechanism.

Growing tray liners may be identical for adjustable and non-adjustable growing trays.

One aim of the ability to adjust the relative height between the deck and the hood is to avoid foliage getting too close or touching the hood as the crop grows.

A growing tray may comprise an attachable plant support framework.

Growing trays may be adapted to have fittings for attaching a crop supporting framework, e.g. for specific groups of crops which grow tall. In use, when the crops at a specific point in their life cycle their growing tray may be transported by a load handling device to a workstation for a plant support framework to be fitted to the growing tray. The crop may subsequently returned to a booth which has sufficient separation between the top of the growing tray and the bottom of the hood to accommodate the crop support framework, which may be the same booth or may be a different booth.

A growing tray may comprising a unique identity tag or label.

Each growing tray may have an RFID tag or marker such as a barcode or QR code that can be read with a scanner or camera providing a unique identity tag or label. Interrelatedly, the load handling devices or load handling devices of the system may have a RFID reader or a scanner or camera capable of reading the lag or label of growing trays. Similarly, workstations, used for processing growing trays, may have an interrelated a RFID reader or a scanner or camera capable of reading the lag or label of growing trays. Thus, the load handling devices have the capability to read the growing tray's tag or label during the operation to pick up the growing tray from a trestle. Similarly each growing tray processing workstation has the capacity to reading the growing tray's tag or label. Each growing tray processing workstation may read the growing tray's tag or label prior to processing the growing tray. In this way the controller can confirm the correct growing tray is being handled at each stage, and may take corrective action if necessary if it is not the correct growing tray at any stage. Advantageously, the system may have enhanced confidence in the integrity of the control, and may allow audit records to be created.

### Load handling device

A load handling device for operating in a farming system is provided. The floor of the farming system may comprise a network of tracks, or track network, based on a grid system, the tracks comprising a first set of track members extending in a first (x-) direction, and a second set of track members extending in a second (y-) direction, the second set of track members running transversely to the first set of track members in a substantially horizontal plane, the load handling device may comprise: a first set of wheels for engaging with the set of track members in the first direction, and a second set of wheels for engaging with the set of track members in the a second direction, wherein the load handling device is driveable in first or second direction to any location on the track network; and a support pad for receiving a growing tray.

The support pad may be raised and or lowered in a vertical (z-) direction.

Load handling devices may also be known as bots, automated vehicles or semi-automated vehicles. In this way a load handling device may be used to lift growing trays and transport growing trays along the network of tracks to any location in the farming system, such as booths, storage locations or workstations. The bot or load handing device may be capable of moving in forward and reverse direction along the x- and y- direction tracks.

Typically, individual growing trays may be placed onto support means, such as trestles by a load handling device. When a load handling device carrying a growing tray is in position, the support pad is lowered so that the trestles support the growing tray. The load handling device may then move underneath the growing tray, away from the location (without continuing to carry the growing tray) along the tracks on to a subsequent lifting and or transporting task.

To lift a growing tray from a storage or other position, with the support pad in a lowered position, the load handling device positions itself beneath the growing tray and raises the support pad such that the load handing device supports the growing tray and my transport the growing tray to an alternative location.

The support pad or vertical lift mechanism may comprise an electromechanical mechanism. The vertical lift mechanism may comprise an electric hydraulic generator and one or more hydraulic ram(s). A protective enclosure may be used to prevent hydraulic fluid contaminating the crop in the event of a failure and leak. The electric hydraulic generator and ram components may be commercially available components.

The load handling device may further comprise a mechanism, extending through the support pad for adjusting the height of a liner within a growing tray.

The load handling devices may further interact with growing trays to adjust the height of a liner within the growing tray. The load handling device mechanism for raising and lowering the height of the liner may extend through gaps in the tray support pad. The mechanism may be a rotating mechanism. The mechanism may connect to or interact with a mechanical arrangement of the growing tray, such as a screw jack or scissor jack as described elsewhere-herein.

The first set of wheels and or the second set of wheels may comprise three or more wheels on each side. The load handling device may comprise a suspension means for one or more of the wheels.

It will be appreciated that while the floor of the growing facility may be substantially flat so that the tracks are in a substantially horizontal plane, it may not be cost effective to ensure that the floor is completely flat. In any event, the floor may have step changes in level or be uneven. The track pathways may be defined by the navigation means of the load handling device, interacting with the control facility, or the track pathways may be defined by grooves or rails as noted herein elsewhere.

The arrangement of three wheels on each side of the load handling device may allow the device to be tolerant to step changes in track height -- either intentional changes in track height or due to imperfections in the construction of the facility floor. When moving on the first set of wheels or second set of wheels over a step change, the load handling device will rotate as the centre of gravity of the load handling device passes over the discontinuity in level, or step. In this way, the load handling device typically keep at least four of the wheels in contact with the surface or track.

Each set of wheels may be located on their respective sides with one wheel substantially at the centre of the side to allow the load handling device to remain substantially stable or tolerant of level changes or steps in the track. For example, when the set of wheels comprises three wheels, the middle wheel may be located substantially at the centre of the side.

Further, by providing a suspension to the wheels, the load handling device may be more tolerant to changes in the track as the load handling device moves along a pathway. All of the wheels may be provided with suspension means. Changes in the track may comprise small changes in direction as well as step changes.

The wheels may be aligned in the first (x-) direction or aligned in the second (y-) direction and the wheels comprise caster wheels.

The wheels may be aligned in x- and y- axis directions of the load handling device, corresponding to the direction of the track member layout in the grid based network of tracks. Where the wheels comprise caster wheels i.e. able to deflect slightly by a relatively small angle centred on the mounted direction, the load handling device may be more tolerant to misalignment between track members or sections of track. The degree of caster may be limited. The caster functionality may be enabled by a spring arrangement. The wheels may be spring-loaded to be in alignment to the load handling device axis. The wheels may have some mechanically limited flexibility to help the load handling device negotiate track imperfections.

The features above are designed and engineered to provide less restrictive requirements on step changes, gradients and alignment of tracks over a two wheel per side vehicle; and allow less restrictive build tolerances. This allows repurposing of old warehouse buildings and reduced tolerance on the construction of new-build buildings.

It will be appreciated that the load handling device may comprise a direction change mechanism for switching between engagement of x-direction wheels and y-direction wheels being engaged with the track.

The direction change mechanism and the tray lift mechanism may be the same mechanism.

The x- direction wheels may be mounted on a sub-chassis which moves vertically supported within a retaining flange at each end. Vertical movement of the sub-chassis in retaining flange may be made to have low friction by use of roller bearings, needle bearings, slide bearings, or bearings. In one arrangement, the vertical movement of the sub-chassis may be achieved with a two-stage hydraulic ram. It will be appreciated that the hydraulic ram may comprise additional stages. The y-direction wheels may be similarly mounted. It will be appreciated that having the y-direction wheels mounted directly to the main chassis with suspension units, and the x-direction wheels moving relative to the main chassis may be advantageous.

In an alternative arrangement, vertical movement of the sub-chassis may be achieved by a toothed rack in a retaining flange. The toothed rack may be driven by a toothed pinion drive wheel by an electric motor. The wheel sub-chassis arrangement may comprise a toothed rack assembly at each end.

Each sub-chassis may comprise one or more sensors for detecting and reporting the relative vertical displacement between the sub-chassis and the support pad or tray carrying chassis.

The load handling device may further comprise a re-chargeable battery and or super capacitor for powering a drive motor, wherein the re-chargeable battery and or super capacitor is charged through inductive charging pads positioned on the underside of the load handling device.

The load handling device may be driven by an on-board motor, which is powered by the re-chargeable battery. In an alternative arrangement, the on-board motor may be powered by a super capacitor. Or in some arrangements, the load handling device may comprise both a re-chargeable battery and a super capacitor. It will be appreciated that super capacitor charging (and discharge) times may be much faster compared with battery recharging times. Accordingly, where both rechargeable batteries and super capacitors are used, the load handling device may benefit from quick increases or top-ups of power from the super capacitor, and more sustained power from the rechargeable batteries.

Charging locations may be conveniently located where load handling devices tend to remain for a period of time but may be anywhere on the track network. Typically, energy providing inductive pads are located between the track rails at specific grid locations.

One or more of the wheels may be drivable.

All the wheels of the first set of wheels and the second set of wheels may be drivable.

Each of the wheels of the sets of wheels may be driven. In this way, if one of the wheels loses contact with the track surface, the load handling device will still be driven by the remaining wheels. Again, this may assist in maintaining stability of the load handling device over uneven surfaces.

One or more of the first set of wheels and the second set of wheels are lockable by locking means.

The locking means may comprise an electromechanical lock for locking the drive motors for x direction travel and or y direction travel. When the load handling device is in a parked position, for example, when lifting or depositing growing trays, when travelling in a lift car, or when in a charging location, the motors may be locked to prevent wheel movement and travel of the load handling device. The electromechanical lock may have releasing means. For example, the releasing means may be a switch, operable by the control system or a technician. When the lock is not applied, the wheels may be able to freely rotate. In this way, if the load handling device fails, the lock may be released and the load handling device may be simply pushed or pulled to a maintenance area. The lock may be releasable by a recover device. A recovery device may further be able to push or pull a failed load handling device once the load handling device is able to free-wheel. A recovery device may move a broken down load handing device into a maintenance area, so as not to put technicians at risk if they were to work in other areas of the system.

The load handling device may further comprise: a RFID reader; a scanner; and or camera, for reading an identify tag or label.

The load handling device may have the ability to read identity tags. For example, during operation, the load handling device may be able to identify specific growing trays. Or the load handling device may be able to identify specific locations within the system, where tags have been placed in or along tracks, or at workstations.

The load handling device and a supported growing tray have a footprint that occupies only a single grid space in the farming system.

A single grid space, or grid unit, may be a single reservable location. In this way, load handling devices, carrying growing trays may traverse any track pathway, substantially without the risk of collision (assuming that the load handling device is centred on a grid location and the growing tray is properly centred on the support pad of the load handling device).

The load handling device may further comprising navigation means for monitoring and controlling motion along the track network. The load handling device may further comprise a communication means for receiving instructions from a central control facility and for transmitting data. The load handling device may further comprise a proximity sensor.

The load handling device may have a software map in non-volatile memory of each floor of the farming system. The software map may contain information about each of the reservable track locations, comprising the physical dimensions, the identity codes of fiducial markers, the position of fiducial markers, physical attributes of the reservable track location for example the presence of trestles, and the topology of the track pathway connections between reservable track locations. The software map may allow the device controller to compute the parameters of the trajectory for each segment of the path provided by the (central) control facility.

The device controller may control the servomechanisms and electric motors that select the wheel state, support pad state, and cause the load handling device to move along the track. The load handling device may acknowledge all instructions it receives with a reply message transmitted to the controller.

At least some navigation and other control instructions for the load handling device are provided to the load handling device by the (central) control facility.

The (central) control facility may provide instructions for a path for the load handling device to travel along, across a floor. The path is planned by a path planning module. A segment of the path at a specific time may be reserved, issued as instructions to the load handling device and logged in advance of a start time. Route instructions to traverse individual segments of the path or track are issued to the load handing device and to a clearance module of the control facility.

It will be understood that the path planning module plans a collision risk free path, in advance of the load handling device moving. Meanwhile, the path clearance module monitors the position, velocity and status reports from all load handling devices operating within the farming system to ensure that the intended planned path for a specific load handling device remains free of collision risk. Planned paths may become compromised and risk collision or another form of accident by: a load handling device failure, underperformance of a load handling device, and or communication failure to or from a load handling device. Where a collision risk is identified, the path clearance module may advise the path planning module so that a new collision-risk-free path may be planned.

The load handling device itself may comprise a device controller. The device controller may receive and acknowledge instructions from the central control facility. Further, the device controller may use outputs from the load handing device sensing means for feedback to use in controlling the movement of the load handling device, and for feedback or reports to provide to the central control facility, particularly the clearance module.

As mentioned above, it will be appreciated that the load handling device may comprise sensing means. Sensors may be one or more of: a laser scanner, a scanner, or a camera, for detecting a fiducial marker in proximity of the tracks; a depth sensor or camera for detecting the track member crossings; sensors for monitoring and reporting the rotation of one or more of the wheels; and a non-driven wheel detector for monitoring and reporting the rotation of the wheel. It will be appreciated that other sensors and data collectors for monitoring the condition of the load handling device may be provided. The load handling device may transmit a position and status report to the central controller (control facility) each time it passes a fiducial marker.

A load handling device may further comprise a proximity sensor, and preferably a proximity sensor on each side of the device, for warning of unexpected collision risks. In such a situation, a warning may trigger an emergency stop. Examples of unexpected articles posing collision risks may comprise other load handling devices directly in the intended path; accidentally dropped growing trays in the intended path; crash barriers marking the end of a path and encountered because of navigational error or mapping error; trestles encountered because of navigational error or mapping error; and (human) operatives working within the facility.

In some arrangements, the system may further comprise a crop survey bot for collecting data and monitoring the condition or growth of the crop while in growing trays. The movement and control of the crop survey bots may be similar to that of the load handling devices. The crop survey bot may travel along growing aisles and survey each growing tray. For example, the crop survey bot may be a vehicle similar to the load handling device but without a tray support pad and with a sensor pack on an arm that may be inserted between the crop in a growing tray and the hood.

Other types of bots or mobile devices operating within the farming system and cooperating with the devices described are anticipated. For example, task specific devices.

### Control Facility

A control facility is provided for controlling and operating a farming system as discussed above. The control facility comprises one or more of: an environment control module; a booth control module; a growing system planner and or manager module; a task planner; a bot path planning module; a bot path clearance module; a communications module; a lift task planner; a bot charge state manager; a data storage and persistence module; a long term data storage module for providing data to machine learning algorithms; a recovery, repair and or maintenance manager module to modify plans and schedules to facilitate recovery, repair and maintenance operations; and a machine learning and or artificial intelligence module designed to fine tune the system based on its previous operational history.

One or more of: air temperature, independently for one or more growing aisles, chambers or growing floors; air humidity, independently for one or more growing aisles, chambers or growing floors; air flow, independently for one or more growing aisles, chambers or growing floors; may be controllable by the control facility, AND OR the control facility may carry out crop planning and or management; the control facility may confirm the correct growing tray is being handled at each stage; the control facility may collate data from growth monitoring station(s); AND OR the control facility may create audit records of each operation on each growing tray.

The control facility may comprise one or more computers. The one or more computers may be physically co-located with the farming system, or the one or more computers may be located remotely from the farming system. The control facility may be accessed via internet and or based in cloud services. A central control facility may be responsible for managing the farming system. Individual components of the farming system, such as the load handling devices or bots, hoods and one or more growth managing stations may comprise local or individual control facilities which communicate with the central control facility. It will be appreciated that the central control facility may coordinate the control systems of individual components within the farming system. Individual components within the farming system may operate autonomously or semi-autonomously to at least some extent.

The one or more computers may comprise: one or more memories and one or more processors, wherein the one or more memories comprise program instructions executable by the one or more computers to implement the control facility for a growing facility. The system or control facility may comprise a plurality of processing components (modules), each configured to perform a respective portion of a crop order fulfilment process for one or more crop orders, wherein the crop order fulfilment control system is configured to have at least one module.

The control facility may comprise any suitable architecture. Software modules of the control facility may be implemented to run on many computers located in several different physical locations within the system, or remotely from the system via a cloud based system for example. Each software module may be responsible for the maintenance of its own data structures and the persistence of those data structures to non-volatile storage mediums or devices.

Data may be exposed and transferred between modules by any suitable means. For example, comprising calls to interfaces designed to exchange data and messaging protocols designed to exchange data.

The software modules may be continuously running in parallel.

State changes in the software may effect downstream modules. State changes may occur immediately on notification of the previous module. Typically, a state change may result in a downstream entry of a task in a task queue, or completion of a task may result in a state change.

The environment control module may control the environment for growing within the farming system. The environment control may be on a global scale/facility wide, or the environment control may be localised to growing aisles, sections of growing aisles, or chambers. The environment control module may work in conjunction with the booth control module. The environment control module may control temperature, and air-flow.

The booth control module may control the growing conditions and or environment for a specific booth. Each booth may have a dedicated booth control module. A cohort of booths may be controlled to have the same conditions. The booth control module may comprise: fluid management, temperature, timing, control of fluid flow within a growing tray, and or chemical composition; control of lighting, intensity, frequency and or duration; control of position and movement of the ingress and egress support arms; control of crop leave temperature and or crop root temperature. The booth control module may work in conjunction with the environment control module.

The hood height may be adjusted by the booth control module based on a pre-calculated schedule for the specific crop grown in the growing tray. The booth control module may deviate from the pre-calculated schedule for the specific crop grown on the basis of analysis of images from the cameras in the hood.

The growing system planner or manager module identifies demand for specific multiple growing trays of crops at specific time slots such that fungible groups of growing trays can be created and allocated to adjacent growing booths in a side-aisle. This may be a highly efficient optimization as no temporary relocation of growing trays will be required to access members of the fungible group because the growing tray nearest the centre of the aisle can be accessed first.

Further the growing system planner/manager module executes an algorithm that considers the extent that crops can have their normal growing cycle extended or delayed and use this to hedge against statistical uncertainty inherent in the demand forecasts. This allows the level of safety stock grown to be reduced resulting in less purge of ultimately unsold stock.

The growing system planner/manager module processes demand forecasts for crops including at least one of the following input parameters:
- 1.: crop type,
- 2.: crop quantity,
- 3.: crop delivery time slot,
- 4.: statistical uncertainty in demand forecast in time slot;
- 5.: maximum demand for planning in time slot;
- 6.: minimum demand for planning in time slot;
- 7.: confirmed demand in time slot;
- 8.: all know resource constraints of the growing system across the timeslots;
- 9.: business rules for dealing with adjudicating between conflicting resource demands;
and an algorithm generates a high level production plan which best satisfies the demand within the constraints using a constraint solving algorithm. Characteristics of the crops are available to the algorithm from the data storage and persistence module. The farm system planner/manager module generates a report for human management and advises of any aspect of the forecast demand that cannot be met; and the trade-off against any other resource demand which contributed to failure to meet all crop demands.

The growing system planner/manager algorithm will consider the extent that crops can have their normal growing cycle extended or delayed and use this to hedge against the statistical uncertainty inherent in the demand forecast. This allows the level of safety stock grown to be reduced resulting in less purge of ultimately unsold stock.

The task planner module evaluates the expected time at a growing booth before harvest, and executes an optimisation algorithm to place the shortest growing duration growing trays in the aisles closest to the floors with the harvesting equipment thus minimising the total lift service time required and hence minimising the number of lifts required.

The task planner module processes and builds a plan to create growing trays of a specific crop at the planting machines, the planned growing booth locations where the growing trays will be grown and the notional harvest time-slots at the harvesting machines. The plans created by the task planner are continually modified as the demand forecast develops and the crops in the specific growing tray or fungible growing tray group grow. The task planner may modify the default growing conditions specified for individual growing trays or groups of growing trays and particularly fungible groups of growing tray; to meet demand at specific time slots. The tasks are created and planned with a task planning horizon time limit ahead of a growing tray creation time.

The growing system planner/manager or task planer may receive data for evaluating the growth of a crop based on measured properties. For example, the reflected and/or radiated light from the crop in comparison with prior knowledge of expected properties of the sensor returns for specific crops at specific points in their growth cycle for a series of predetermined modulation schemes. From a comparison of the sensor returns against predetermined expected returns for the series of modulations the control facility may make an estimate of the growth status of the crop in a tray, relative to a nominal growth profile for the crop. Estimates may be refined, blended or modified by estimates of the growth status of the crop in the tray obtained from processing images of the crops from one or more cameras and comparing those images against a database of previously determined images of the specific crop as it progresses through its life cycle on at least one previously analysed growth profile. The control facility may then use the estimate to update the illumination scheme based on the knowledge of the anticipated harvest date and time of the tray; and predetermined data relating to the growth of the crop relative to a nominal illumination schedule.

The growing system bot or load handling device path planning module, for planning route to be taken by load handling devices, may reserve the overshoot reservable track location for the estimated settling time of load handling device lateral control systems for each segment of the path. Where a segment of path is defined as from a reservable location that the load handling device starts moving from to the reservable location where the load handling device is planned to next come to rest, this include the transient stop as the load handling device changes the wheel configuration between x and y, or between y and x.

The path planning module reserves reservable locations along the tracks for specific growing tray move tasks. A separate instance of the load handling device path planning module may run for each floor. The load handling device path planning module creates reservation tables for all reservable locations on the entire floor. Each reservable location may have many reservations for different load handling devices at different time periods. As collisions between large load handling devices may require extremely lengthy recovery procedures, the load handling device path planning module may reserve the overshoot reservable location for the estimated settling time of load handling device lateral control systems; to further minimise the risk of load handling device to load handling device collision. The load handling device path planning module identifies and evaluates these potential routes as part of its default behaviour. In some instances, where load handling devices are not carrying a growth tray, it may be possible to plan routes beneath tray storage locations.

The load handling device or bot path clearance module, for ensuring that the planned route will be clear for a load handling device to follow, creates records of occupancy of each reservable location by load handling devices, and records of reservable locations load handling devices have been given clearance to enter as they traverse each reservable location on their planned paths between growing tray pick-up and growing tray deposit. Typically load handling devices report their position entering a reservable location, centred on a reservable location and leaving a reservable location. The load handling device clearance module is necessary to prevent collisions between load handling devices as a result of electromechanical failures of one or both load handling devices, communication failures with one or both load handling devices, failures of load handling devices to maintain the physics profile.

The load handling device selection and path planning module may be responsible for selecting an available bot to carry out a lifting and or transporting task.

In connection with the movement of the load handling devices or bots within the system, WO2015185628 (WO'628) Ocado Innovation Limited discloses METHODS, SYSTEMS AND APPARATUS FOR CONTROLLING MOVEMENT OF TRANSPORTING DEVICES on a grid based rail or track system. It will be appreciated that similar methods, systems and apparatus may be used to control and operate the system and apparatus described herein.

It will be appreciated that WO'628 describes operation of load handling devices or bots on a grid system which may be thought of as a single level or floor system. For operation of the system described here, the control facility may control each floor independently, treating lifts as load handling device in-duct and out-duct points and running control modules in parallel corresponding to each floor of the farming system. Alternatively, the control facility may be arranged to control a multi-floor system incorporating the control for each floor and lift task planners into a single main control function operated by the control facility.

The communications module may be responsible for communications between other modules and managers. Each component of the growing facility may comprise a communications module. Each load handling device or bot may comprise a communications module. Each hood may comprise a communication module. Each lift may comprise a communications module. Each workstation may comprise a communications module. Each monitoring station may comprise a communications module.

A lift task planner module creates the sequence of lift-car stops. In the preferred embodiment the lift task planner module selects lift operations to maintain the sequence of load handling device moves with the priority as determined by the task planner module, but whenever queues form the lift task planner module switches the pick-up and drop-off planning to maximise lift throughput. In the case of a double deck lift-car this would mean delaying certain pick-ups to create concurrent pick-up and drop-off operations on adjacent floors.

The recovery, repair and maintenance manager module auto triages system failures including, but not limited to:
1. Load handling device failures, typically the module sets flags in the data to specify the reservable locations failed load handling devices occupy are excluded; and sets flags in the data to specify that any inaccessible growing trays as inaccessible; and any failed load handling devices are un-taskable i.e. unsuitable to be assigned tasks. The module will request the path planning module to run and its algorithm looks for and plans alternative routes avoiding the newly excluded reservable locations. Any tasks which are not plannable because of multiple failures are flagged to human management, who can choose to bring maintenance and recovery missions forwards.
2. Lift failures, typically the module sets flags in the data to specify the lift is out of service; and sets flags in the data to specify that any stranded load handling devices are un-taskable and any inaccessible growing trays (on a stranded load handling device) are inaccessible. The module will request the lift task planner module to re-plan all outstanding lift tasks.

The recovery, repair and maintenance manager module can also be used to configure the growing facility for human recovery, human repair and human maintenance operations. For example a manual recovery of a failed bot or load handling device may be achieved with all load handling devices on a floor either safety stopped or moved to other floors; and then safety barriers placed across the tracks to physically prevent load handling devices coming in conflict with humans. The recovery, repair and maintenance manager module would also set flags in the data to exclude all the isolated track; so that normal production could resume on the non-isolated section of the floor. Once the recovery is completed, all load handling devices on the floor would be stopped or moved to another floor. The physical safety barriers would be removed, the flags set in the data to exclude all the isolated tracks would be cleared. The load handling device path planning module would then be able to use all non-excluded reservable locations when planning load handling device paths as load handling device activity resumed on the floor.

The machine learning and or artificial intelligence module is designed to enhance planning, productivity and crop management and fine tune the system based on its previous operational history. The module may use machine learning and artificial intelligence techniques in at least the following ways:
1. Analysing long term data for load handling device moves, and aggregating over the different classes (models) of load handling devices to refine the parameters used to define the physics models used in path planning.
2. The identification of possible load handling device routes on a floor, and the optimization of the routes selected.
3. Analysing long term data for lift moves, and aggregating over the different classes (models) of lifts to refine the parameters used to define the physics models used in lift planning.
4. Analysing the growing of specific varieties of crops under the different lighting, temperature, humidity, wind speed and irrigation to optimize cultivation.
5. Analysing the growing of specific varieties of crops under the different lighting, temperature, humidity, wind speed and irrigation to optimize the ability to delay or accelerate the crop life cycle; such that the crop production can be tailored to meet the varying demand forecast. For some crops the demand forecast can have a significant statistical uncertainty until the order cut-off for a specific delivery time slot approaches.

The machine learning and or artificial intelligence module may use, but is not limited to, the following Artificial Intelligence and Machine Learning techniques:
- 1.: Machine learning
- 2.: Neural networks
- 3.: Machine learning (general)
- 4.: Supervised learning
- 5.: Probabilistic graphical models
- 6.: Support vector machines
- 7.: Bio-inspired approaches (including, but not limited to ant colony optimisation)
- 8.: Classification and regression trees
- 9.: Deep learning
- 10.: Rule learning
- 11.: Unsupervised learning
- 12.: Reinforcement learning
- 13.: Instance-based learning
- 14.: Latent representation
- 15.: Multi-task learning
- 16.: Logical and relational learning
- 17.: Logic programming
- 18.: Expert systems
- 19.: Description logics
- 20.: Logic programming (general)
- 21.: Fuzzy logic
- 22.: Ontology engineering
- 23.: Probabilistic reasoning

It will be appreciated that the track and load handling devices are arranged such that when a load handling device is positioned at a fiducial marker marking the notional "center" of a reservable location the load handling device may be free from collision risk with other load handling devices whether stationary or moving in adjacent locations.

It will be appreciated that alignment of the load handling device for direction change to the orthogonal direction on the grid based track network is achieved using a laser scanner, a scanner, or a camera on the load handling device and a fiducial marker in proximity of the tracks marking the position of the intersection of the orthogonal tracks in the reservable location. This arrangement may provide accurate positioning of the load handling devices wheels with the tracks in the orthogonal direction.

It will be appreciated that alignment of the load handling device within the growing booth is achieved using a scanner, a laser scanner, or a camera on the load handling device and a fiducial marker or markers in proximity of the tracks marking the notional "center" point of the reservable location from which the growing booth. This provides accurate positioning of the growing tray relative to trestle and hood.

The load handling devices navigational system for tracking and controlling motion along the orthogonal or grid based track structure is achieved by using sensor information.

In use for load handling device or load handling device operation in the growing facility, a detailed map of each floor is downloaded to each load handling device. The data associated with the map provides the load handling device's motion control system with sufficient data to compute its trajectory and control its motion along the trajectory. The data included with the map includes, but is not limited to, the physical dimensions of the reservable location, the positions of the fiducial markers on the reservable location, the connections between the reservable location and any adjacent reservable locations.

The instructions for the load handling device to move are generated by the controller's load handling device path clearance module; and transmitted by the controller's communications module to/from the load handling device. The instructions for the load handling device to move have a start time for the move; and are transmitted to the load handling device in advance of the start time. The load handling device may transmit confirmation that the instructions are received. This protocol allows the move instruction to be transmitted several times if required and adds resiliency to the communications; because 100% message delivery is not guaranteed or expected.

Alignment of the load handling device for direction change to the orthogonal direction may be achieved using a laser scanner, a scanner, or a camera on the load handling device and a fiducial marker in proximity of the tracks marking the point. This provides accurate positioning of the load handling devices wheels with the tracks in the orthogonal direction. For reservable locations where change to the orthogonal direction is not permitted the fiducial marker may be placed at the notional centre point of the reservable location.

Alignment of the load handling device within the growing booth may achieved using a scanner, a laser scanner, or a camera on the load handling device and a fiducial marker or markers in proximity of the tracks marking the reservable location centre point. This provides accurate positioning of the growing tray relative to trestle and hood.

The system may comprise one or more growth monitoring stations. A growth monitoring station may comprise one or more sensors for collating data for transmitting to the central control facility.

### Use

A method of using a farming a system to produce a crop is provided. The method may comprise one or more steps of: preparing one or more growing trays with a crop; lifting, transporting and depositing growing trays using a load handling; depositing a growing tray in a growing booth; retrieving a growing tray from a growing booth; arranging growing trays in growing aisles according to life-cycle phase of the crop; controlling the environment in growing aisles according to the requirements of the crop; controlling the environment in growing trays and or services provided to a crop using a hood; harvesting a crop; AND OR transferring a harvested crop from the farming system to an integrated second system.

Typically, the preparation of an initially seeded or plug planted growing tray may be on the ground floor of the system at workstations. Then, the growing trays are transported to the lifts on load handling devices to be taken to a growing floor. Or the growing tray preparation may be in a designated area on a growing floor. Once on the growing floor, the growing trays are positioned on a growing trestle, storage or booth location in a growing aisle.

Where possible, a cohort of growing trays in a particular aisle are maintained at the same point in the crop life cycle such that conditions in the entire aisle may be optimised to suit the cohort. It will be appreciated that selective finishing of the crop in particular growing trays may be facilitated by the central control facility using the controllable lighting and services provided by individual hoods. In this way, hoods may be controlled to sequence finishing of the cohort to harvest.

By following a program of selective finishing of a crop cohort of growing trays, the number of moves of growing trays may be minimised or optimised (compared with schemes which move growing trays between aisles for different periods or phases of the crop's life cycle) and thereby reducing the MHE requirement of the system.

If a load handling device is instructed to deposit a growing tray on a pair of trestle in a growing booth by the central control facility, while carrying the growing tray, the load handling device travels along an access aisle until the load handling device is adjacent to the desired growing booth location. With the tray support pad raised, the load handling device moves into a side-aisle from a growing aisle such that the growing tray on the tray support pad is above the trestles in the side-aisle. It will be appreciated that the pathway into the growing aisle will be calculated or planned by the control facility to avoid booth storage locations where growing trays are resting on trestles. Typically, the load handling device may be instructed to deposit the growing tray in a booth so as not to obstruct access to other available booths in the growing aisle. When in position at the instructed location, the load handling device then lowers the tray support pad, leaving the tray supported by the trestle in the booth location. The load handling device then moves in the reverse direction, or via another instructed route, to return itself to an access aisle.

Once a growing tray has been placed on a pair of trestles at a growing position, the irrigation ingress fluid pipe (or hood outlet) may be lowered from the hood by a servomechanism into the growing tray header pool. Similarly, the irrigation egress fluid pipe (or hood inlet) is lowered from the hood by a servomechanism into the sump pool. The egress irrigation fluid flow is maintained by a "self-priming pump" which can operate with an air/fluid mixture in the infeed to the pump.

If a load handling device is instructed to retrieve a growing tray on a pair of trestles from a growing booth by the central control facility, the load handling device travels along an access aisle until the load handling device is adjacent to the side-aisle containing the booth position storing the specific growing tray. With the tray support pad lowered, the load handling device moves into the side-aisle until the tray support pad is positioned below the target growing tray. The load handling device then raises the tray support pad, lifting the growing tray above the trestles. Carrying the growing tray, the load handling device then moves in reverse through the storage area, with the tray support pad in the raised position to avoid colliding with trestles, to the access aisle. Once on an access aisle track, the load handling device may lower the tray support pad before navigating to its next destination. Of course, it will be appreciated that any hood fluid pipes would first be retracted before moving the growing tray from the booth.

It will be appreciated that where the production requirements are such that multiple growing trays of the same crop at the same point in the life cycle need to be grown, then the control facility may exploit the fungible nature of groups of growing trays with the same crop at the same point in the crop life cycle, and place the growing trays in the same growing aisle. When any of the growing trays of the fungible group are selected for harvesting, the vertical farm controller planning module selects the growing tray in the fungible group closest to the access aisle. That is, the control facility selects a growing tray that can be accessed without temporarily relocating the other growing trays in the growing aisle.

Typically, when a crop is ready for harvest load handling devices will transport the growing trays via the access aisles and or lifts to harvest-stations where the crop will be harvested by human workers, harvested by robots, or harvested by automated or semi-automated harvesting machines. Typically, a growing tray with a crop ready for harvest will remain on the load handling device whilst it passes through the harvesting machine.

For crops supporting multiple harvests, typically, after a harvest the growing tray would be returned to an aisle to re-join its fungible cohort. For a single harvest crop or after the final harvest, the growing tray will remain on the load handling device to be transported to and pass through a cleaning-station. Typically, the growing tray will remain on the load handling device whilst it is cleaned and sterilized. The liner may be removed, cleaned and replaced automatically or manually, or the liner may be replaced with a pre-cleaned liner, and the removed liner passed through a cleaning process for later use. Subsequently, with the growing tray continuing to remain on the load handling device, the growing tray may be returned to a planting workstation, where the growing tray is reseeded or replanted with plugs.

In an efficient use of the farming system described herein, a planted growing tray is prepared at a creation workstation and transported to a booth location, and the growing tray remains at the same location until harvest.

In another efficient use of the farming system described herein, a planted growing tray is prepared at a creation workstation and transported to a growing trestle location and the growing tray remains in the same growing aisle until harvest. However, as the crop develops, the growing tray is moved between growing booths in different galleries or chambers to exploit the use of different hood heights and or different environmental conditions.

For some crops, growing trays may be planted densely with seeds. Once the seeds have germinated and initially grown in a growing booth, the growing trays may be transported to a transplant workstation where the young plants are removed as "plugs" and re-planted in growing trays at lower density for the rest of their lifecycle. The transplant workstation may be operated with human workers, or with robots, or with automated transplant machines.

The number of load handling devices required by the system may be determined by the number of growing tray moves, rather than the number of aisles and or booth locations, or the number of floors.

In this way, the present invention addresses some of the problems of the prior art and provides a hood for a farming system growing floor booth.

### Integration with other systems

The farming system and growing facility may be integrated with an automated grocery customer fulfilment centre. The integration may comprise:
- Conveyors transporting totes or containers containing harvested, bagged and labelled produce directly from one or more of the harvesting workstations to the goods inwards or inbound mechanical handling equipment of the grocery customer fulfilment centre. In some arrangements, the harvesting workstations may be designed to be compatible with the totes used within the automated grocery customer fulfilment centre, and particularly the goods inwards mechanical handling equipment and system.
- Autonomous airborne vehicles or drones transporting totes containing harvested, bagged and labelled produce directly from one or more of the harvesting workstations to the goods inwards or inbound mechanical handling equipment of the grocery customer fulfilment centre. In some arrangements, the harvesting workstations may be designed to be compatible with the totes used within the automated grocery customer fulfilment centre, and particularly the goods inwards mechanical handling equipment and system.
- Autonomous terrestrial vehicles or autonomous guided vehicles transporting totes containing harvested, bagged and labelled produce directly from one or more of the harvesting workstations to the goods inwards or inbound mechanical handling equipment of the grocery customer fulfilment centre. In some arrangements, the harvesting workstations may be compatible with the totes or containers used within the automated grocery customer fulfilment centre, and particularly the goods inwards mechanical handling equipment and system.
- Any form of human operated goods vehicles transporting totes containing harvested, bagged and labelled produce directly from one or more of the growing system's harvesting workstations to the goods inwards or inbound mechanical handling equipment of the grocery customer fulfilment centre. In some arrangements, the harvesting workstations may be designed to be compatible with the totes used within the automated grocery customer fulfilment centre, and particularly the goods inwards mechanical handling equipment and system.
- Any form of magnetic levitation transportation system for totes containing harvested, bagged and labelled produce directly from one or more of the harvesting workstations to the goods inwards or inbound mechanical handling equipment of the grocery customer fulfilment centre. In some arrangements, the harvesting workstations may be designed to be compatible with the totes used within the automated grocery customer fulfilment centre, and particularly the goods inwards mechanical handling equipment and system.
- Any form of integration between the automated grocery customer fulfilment centre's order management and order forecasting systems and the growing system's planner/manager module. In particular where such integration is used to ensure product availability to the automated grocery customer fulfilment centre in terms of individual crop and the quantity available at specific time slots; and to minimise the purge cost in the growing system.

Embodiments of the present invention will now be described, by way of example only, with reference to the accompanying drawings, in which like reference numerals are used for like features, and in which:
Figure 1 is a representative drawing of a prior art growing system;
Figure 2 is a representative drawing of a prior art growing system;
Figure 3 is an illustration of an overview floor plan of a growing floor;
Figures 4 and 5 illustrate of a portion of the growing floor, floor plan of shown in figure 3;
Figure 6 illustrates a hood and growing tray viewed from the front of the arrangement;
Figure 7 illustrates a plan view of a hood, showing the understand or as viewed from below;
Figure 8 illustrates a side elevation or perspective view of a hood and growing tray;
Figure 9 illustrates a side view of the hood and growing tray;
Figure 10 illustrates a detailed view of a hood support arm and growing tray;
Figure 11 illustrates a plan view, and a front elevation of a growing tray;
Figure 12 illustrates cross sections of the growing tray illustrated in figure 11;
Figure 13 illustrates a perspective view of a growing tray with adjustable deck;
Figure 14 illustrates a mechanism for adjusting the deck height of the growing tray illustrated in figure 13;
Figure 15 illustrates a detail of a deck height jack for use in the arrangements shown in figures 13 and 14;
Figure 16 illustrates a plan view of a growing tray and liner;
Figure 17 illustrates a plan view of a long side, or y-z side, of a load handling device, with a growing tray resting on the lifting pad;
Figure 18 illustrates a plan view of the short side, or x-z side, of the load handing device without a growing tray and detailing the lifting pad;
Figure 19 illustrates a plan view of a short side, or x-z side, of a sub-chassis of the load handing device with the retaining flange removed;
Figure 20 illustrates a plan view of the long side, or y-z side, of the load handling device;
Figure 21 illustrates a plan view of the underside, x-y, of the load handling device;
Figure 22 is a schematic diagram of a controller for the farming system;
Figure 23 illustrates a method of using the farming system; and
Figure 24 illustrates a plan view of a growing tray and liner without a header pool.

### Detailed description of drawings

The present invention may form part of a larger system. It will be appreciated that the system, methods and devices described herein are exemplary only, and other combinations and configurations of the apparatus and equipment described are anticipated by the inventors of the present disclosure without departing from the scope of the invention described here.

As noted above, figures 1 and 2 are representative drawings of prior art indoor farming systems. The farming system, load handling devices, booths and hoods, methods of use and control facilities of the present invention are illustrated in the remaining drawings.

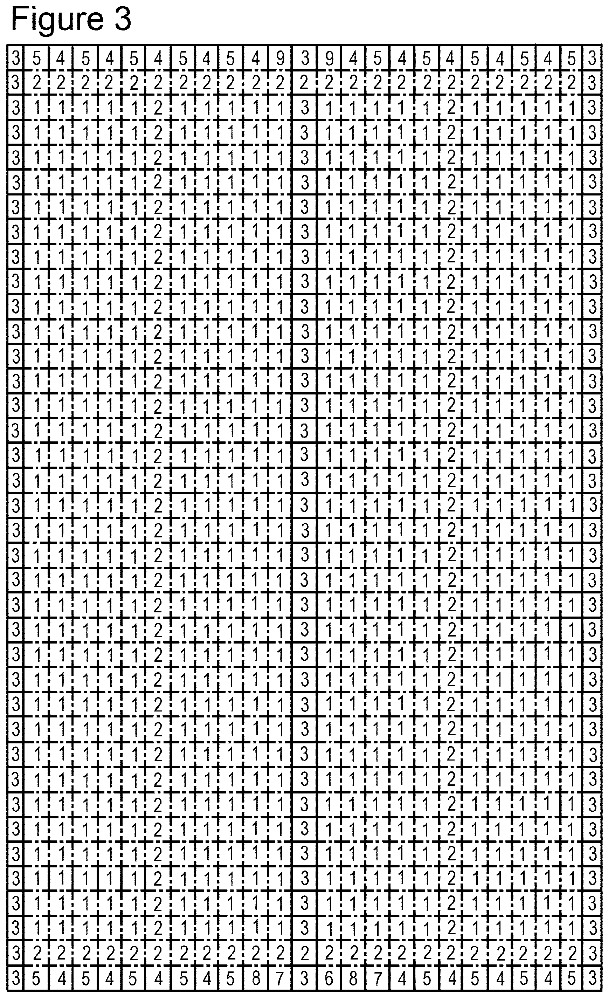

Figures 3-5 show a schematic drawings of a growing floor. The growing floor is divided into a grid of units where each unit has a designated function. Aisles 2 are arranged across the width and length of the growing floor. Typically, access aisles 2 are two units wide and arranged across each end of the growing floor as shown in figure 3. Between the ends, the access aisles 2 are joined by growing aisles 2 running perpendicularly to the access aisles 2 and along the length of the growing floor. The growing aisles 2 are typically one unit wide. Adjacent to the growing aisles 2 are growing booth locations 1. The growing booth locations 1 may be accessed by load handling devices from either the access aisles 2 or the growing aisles 2.

As noted above, each growing booth location 1 is provided with trestles for supporting growing trays, and a hood for servicing the growing trays. When a load handling device is not transporting a growing tray, the load handling device is able to move in x- and y- directions to any growing floor aisle or booth location, via any accessible route.

As illustrated in figure 3, a maintenance area 3 is located through the centre of the designated booth 1 area of the floor. Further maintenance areas 3 are located along the long sides of the floor and at some unit locations along the short sides of the growing floor. The short sides of the growing floor also provide grid unit locations for lay-bys, temporary storage, lift ingress positions, lift egress positions, lift shafts, and charging points.

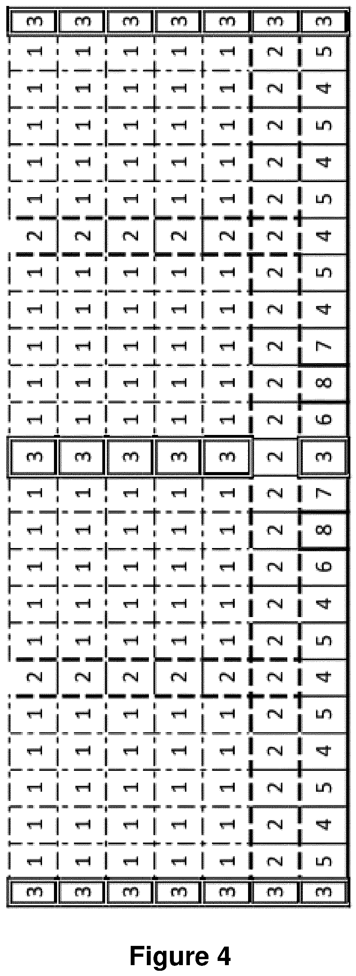

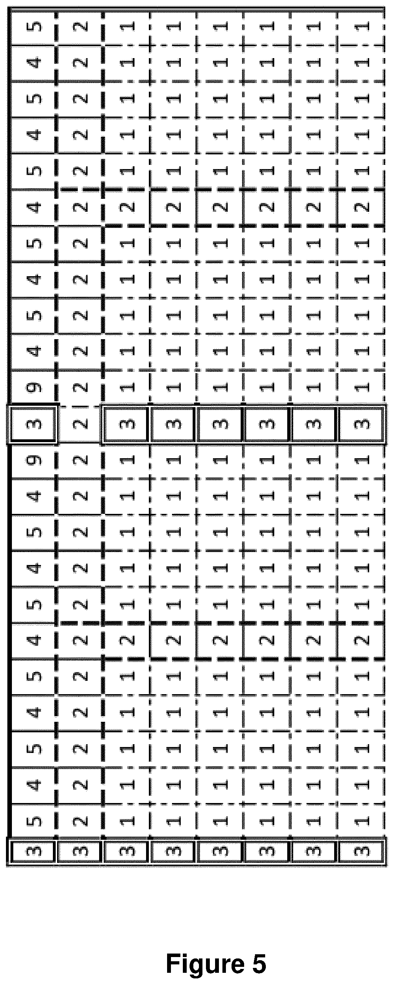

Figures 4 and 5 show, in more detail, a portion of the growing floor as illustrated in figure 3.

Figure 4 illustrates an end of the growing floor comprising two lift. As illustrated, the end row of the growing floor comprises two lift shafts 8. Adjacent to each lift shaft 8, on a first side is a lift ingress position 6 and a lift egress position 7. The lift ingress 6 and lift egress 7 are kept clear so that load handling devices may enter and leave the growing floor to be transported to other floors within the system. Between the lift areas, there is an additional maintenance area 3. The remainder of the unit locations along the end row of the growing floor alternative between lay-bys 4 and temporary storage locations 5 which may be used during operation of the system. Typically lay-bys 4 are used to allow load handling devices, unloaded or loaded with growing trays to pass when the aisle are congested. Lay-bys 4 may also be used to temporally locate malfunctioning load handing devices. Temporary storage locations 5 will typically comprise a pair of trestles. In this way, growing trays may be temporary placed on trestles while they await further transportation to other locations. It will be appreciated, that the temporary storage locations 5 are located relatively close to the lift shafts 8 so that they may be used as a waiting area for transportation between floors in the system. Temporary storage locations 5 may be used while load handling devices complete other tasks. Conveniently, as illustrated in figures 3-5, temporary storage locations 5 arranged adjacent to access aisles which may be primarily used for transport.

Figure 5 illustrates a corner of the opposite end of the growing floor, relative to figure 4, of figure 3. Similarly to the first end, for the majority of the end row, the grid unit locations alternate between lay-bys 4 and temporary storage locations 5. In addition, the end row comprises maintenance area 3 and charge point locations 9. Charge points 9 are used to re-charge the power resource of the load handling devices. Conveniently, the charge points 9, lay-bys 4 and temporary storage locations 5 are located adjacent to access aisles 2.

It will be understood that the specific layout of the growing floor may be adapted to the building in which it is located. The proportion of different types and use of unit grid locations may be adjusted according to availability and need. Further, it will be appreciated that other layouts of the growing floor are anticipated in order to provide a system which operates efficiently. The precise lay out will depend on, the total size of the system, type of crop or living organism being grown and processed, the intended crop yield, amongst other things.

It will be appreciated that the growing floor as illustrated in figures 3-5, and particularly the growing booth locations 1 may be divided into specific types of aisles such as germination aisles or stratification aisles and or chambers as discussed above. Some sections of the growing floor may be divided by partition walls and controlling doors (not shown).

It will be appreciated that global or facility wide environmental control facilities may be located at the ends of the aisles, above the floor in the ceiling, or in maintenance areas.

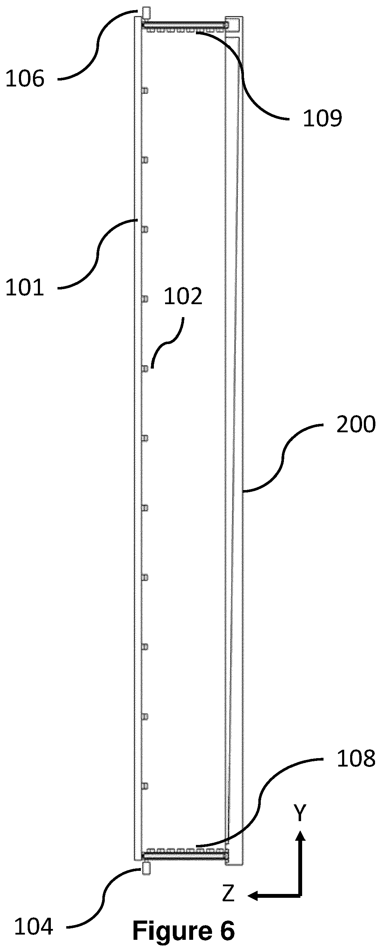

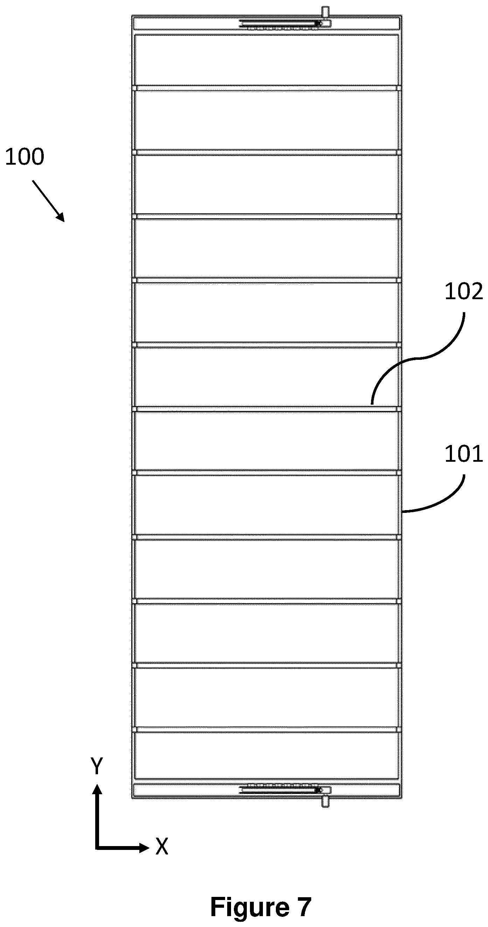

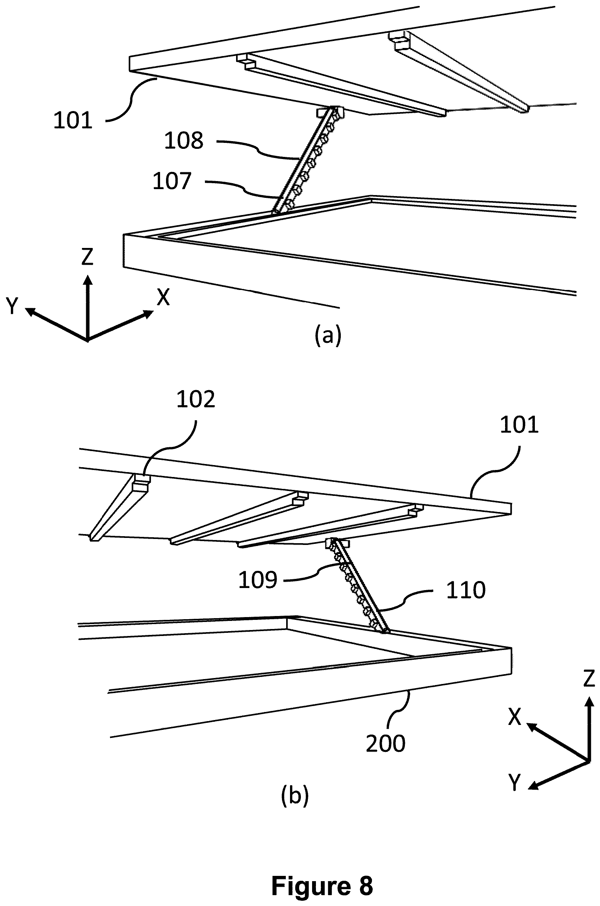

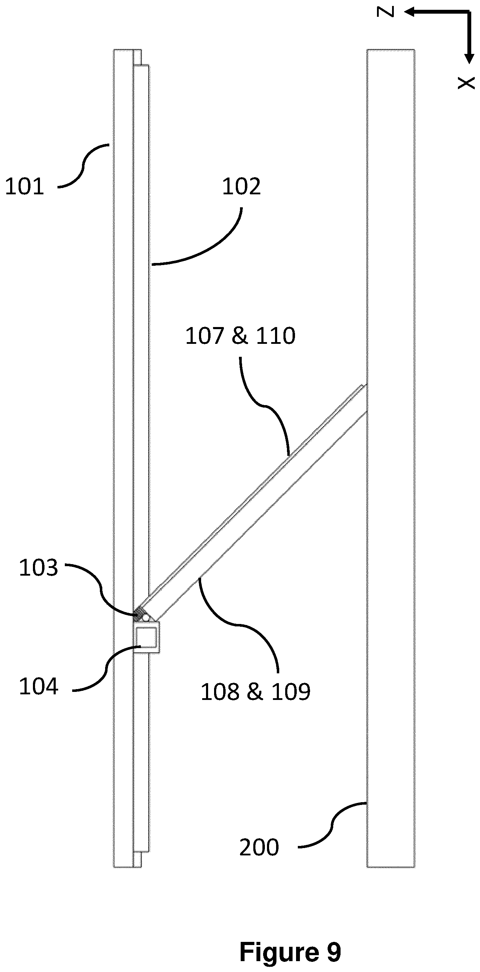

Figures 6-10 illustrate various views of the hood and trays for a booths.

As can be seen in figures 6, and 8-9, within a booth, the hood 100 is arranged above the growing tray 200. Within the booth the growing tray 200 rests on trestles (not shown) so that the growing tray 200 sits substantially level.

As best seen in figures 6 - 8, a light strips 102 extend across the width of the hood 100, mounted on a plate 101. The lighting means may have any suitable arrangement to ensure that the growing tray 200 is fully illuminated, and could have any alternative arrangement to ensure that the growing tray 200 is properly illuminated.

As shown in figures 6 and 8-10, support arms 108, 109 are provided for fluid ingress pipes 107 and fluid egress pipes 110 respectively. The support arm 108, 109 extend from the hood 100 into the growing tray 200, more particularly respectively to a header pool and a sump pool. The support arms 108, 109 are held to the hood 100 via respective hinge fittings 103, 105 and movable between a stowed position and a deployed position. The position of the support arms 108, 109 are controlled by respective servo actuators 104, 106.

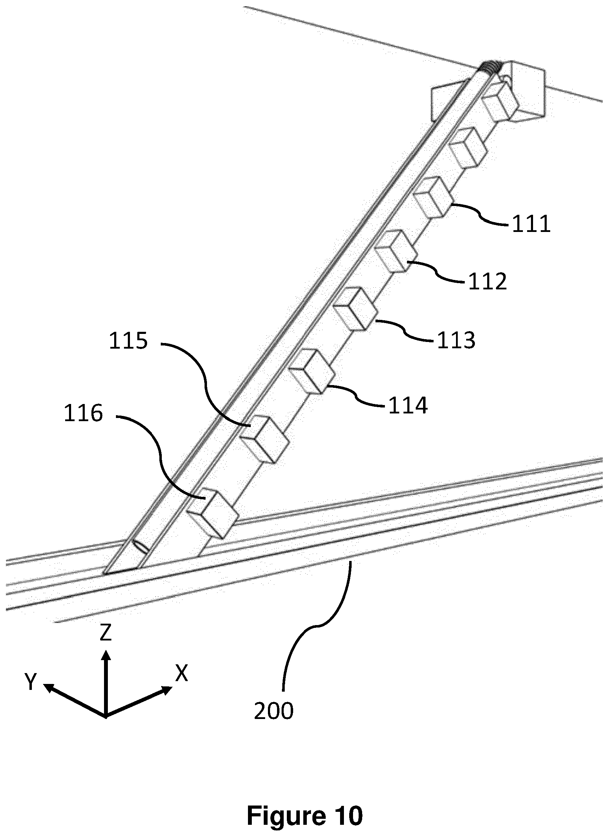

As shown in detail in figure 10, various sensors are arranged along the support arms 108, 109 to provide data that may be fed back to the system control facilities. The sensors shown are: an air humidity sensor 111, a wind speed sensor 112, an air temperature sensor 113, a camera 114, a re-radiated light sensor 115 and an irrigation fluid depth sensor 116.

It will be appreciated that the fluid depth sensor 116 is arranged at the distal end of the support arms 108, 109 relative to the hood plate 101 so that the fluid depth sensor 116 may be submerged in a growing tray pool. It will be appreciated that the sensors 111-115 may be arranged in any order along the support arms 108, 109.

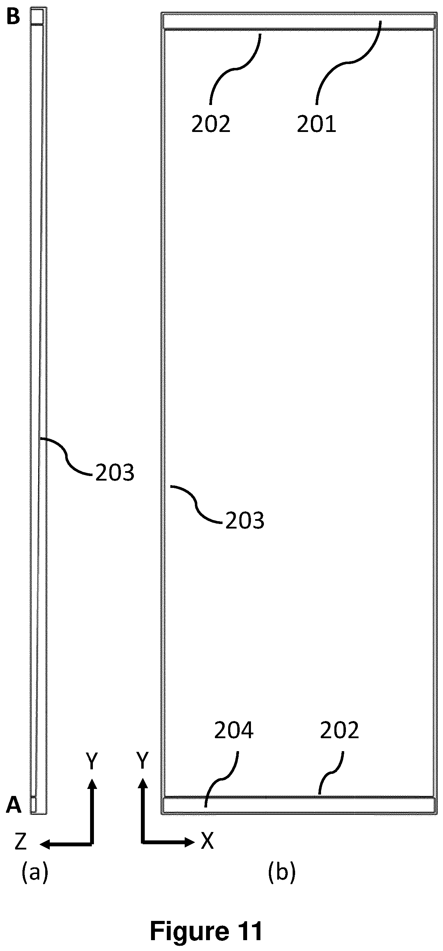

Figures 11-16 illustrate arrangements of a growing tray 200 for growing crops in the farming system. The growing tray 200 is used to move the crop around the system on load handling devices, in addition to supporting the crop while developing from seeds to being ready to harvest. As noted above, the growing tray 200 may be placed on trestles in temporary storage locations, or on trestles in growing booth locations. In growing booth locations, the growing tray 200 may be provided with services by a hood 100.

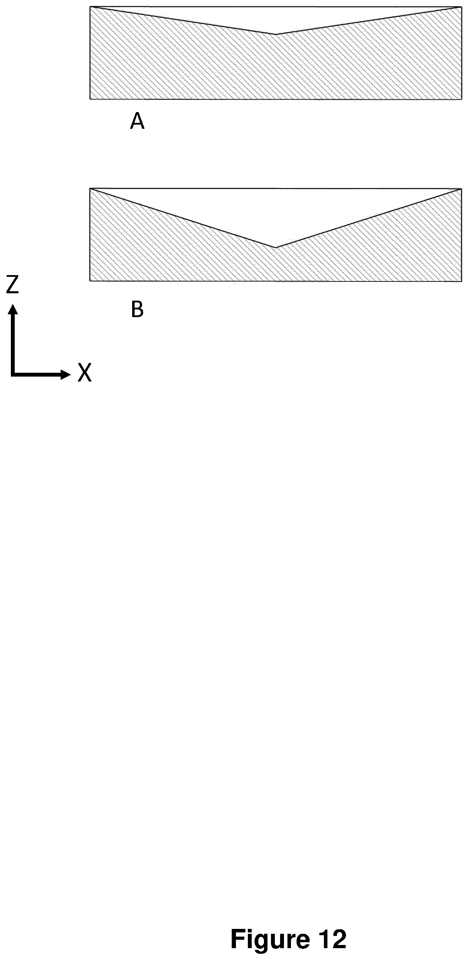

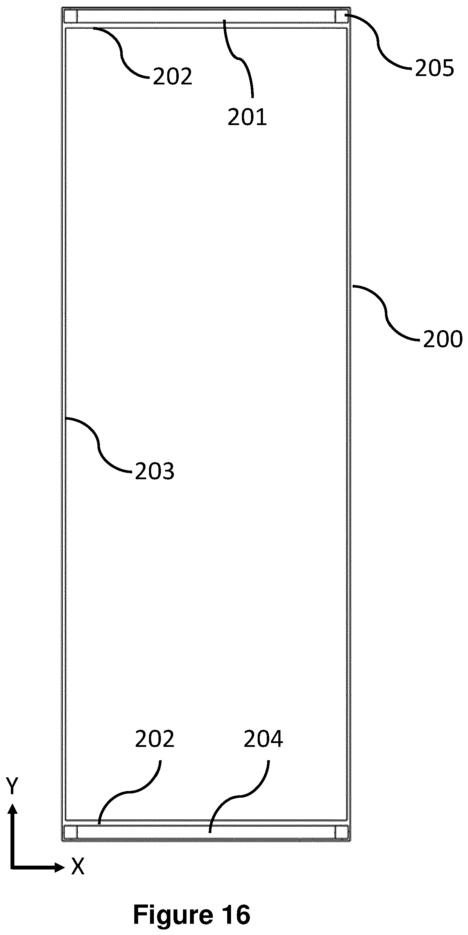

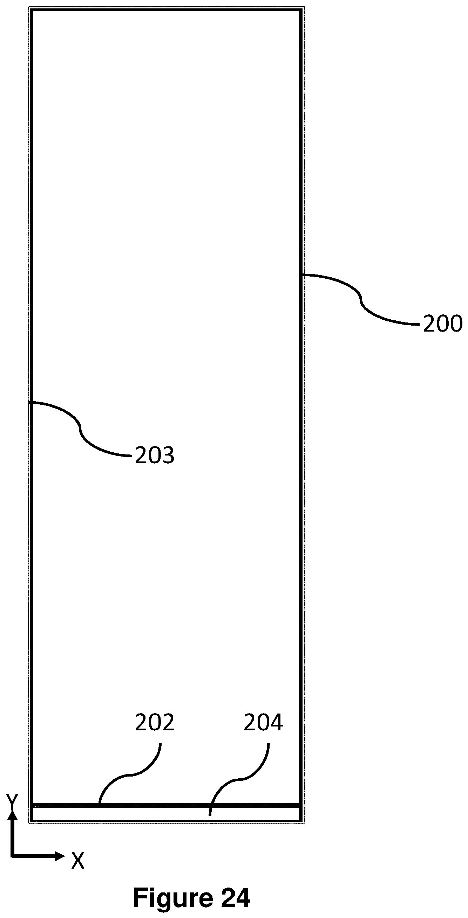

Figure 11a illustrates a plan view, and figure 11b illustrates a front elevation of a growing tray 200 and liner 203. The tray 200 is of the ebb-and-flow type. At one end the tray 200 has a header pool 201, which may be filled by the fluid outlet of a hood 100 to provide fluid ingress to the tray 200. The header pool 201 is separated from the growing area by a permeable barrier 202, which allows fluid to flow into the growing area at a controlled rate. At the opposite end of the growing tray 200, the tray has a sump pool 204, which is also separated from the growing area by a permeable barrier 202. As can be seen in figure 11b, the base of the tray 200 slops from the header pool 201 towards the sump pool 204 so that fluid may flow from the header pool 201 to the sump pool 204. Figures 12a and 12b illustrate cross sections of the growing tray 200, taken through lines A and B shown in figure 11b respectively, and the difference in depth between the two ends of the tray 200 can be readily seen. The liner 203 sits in the tray 200 to provide a growing deck. The liner extends over the pools 201, 204 and supported in the corners by support pads 205 (figure 16 illustrating a plan view of a growing tray and liner). Figure 24 illustrates a similar plan view of a growing tray and liner as shown in figure 16, however, in this example, there is no header pool, instead the sump pool 204 acts as a combined header and sump pool.

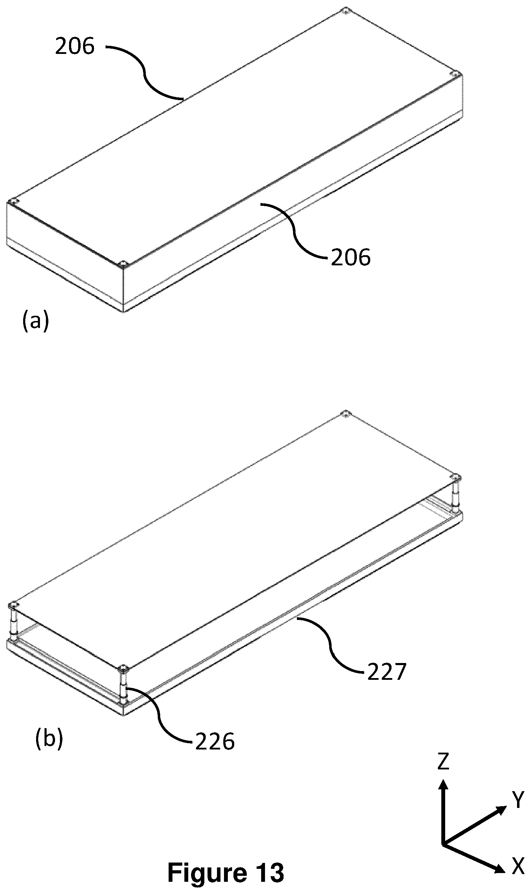

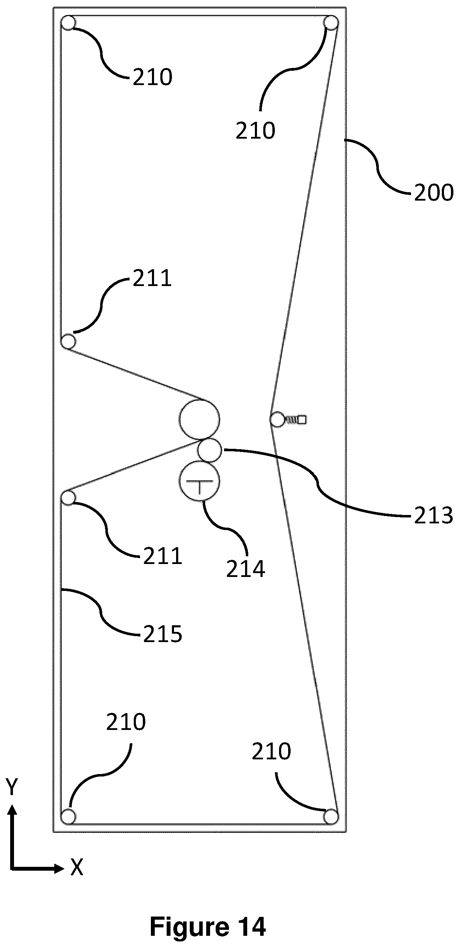

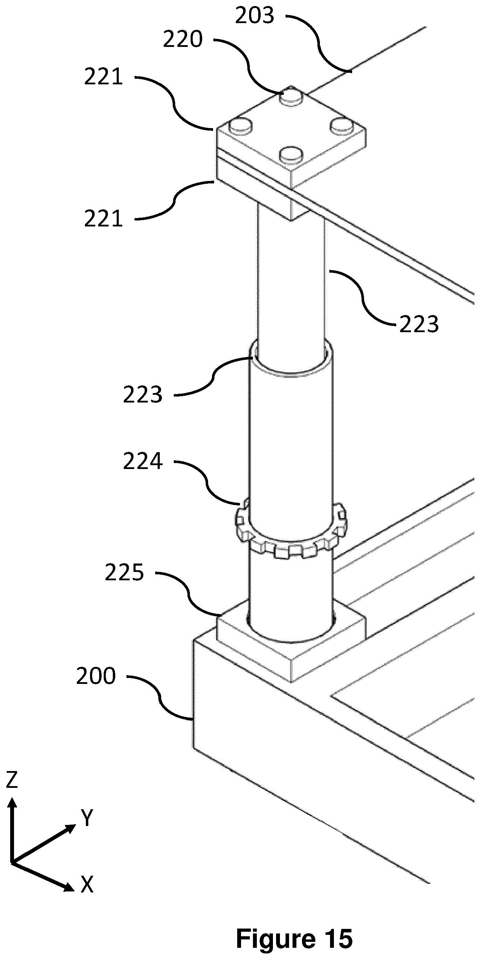

The growing area or deck of the tray/liner 200, 203 may comprise an adjustable deck as illustrated in figure 13. Figure 13a illustrates a perspective view of a growing tray with side walls 206, and figure 13b illustrates a perspective view of a growing tray with side walls removed and an adjustable deck is visible. In this way, the elevation of the growing surface, or height of the liner 203 within the growing tray 200 may be adjusted. The mechanism for adjusting the deck height is illustrated in figure 14, and figure 15 illustrates a detail of a deck height jack for use in the arrangements shown in figures 13 and 14.

A drive pulley or cog 212, and intermediate drive gear 213 are located substantially at the centre of the tray 200. Driven wheels or cogs 210 are located at the corners of the tray 200, and are linked to the drive pulley via a belt or chain 215 which extends around the drive pulley 212 and each of the driven wheels 210. A spring may be used to adjust the drive belt tension. In addition, an indicator 214, interacting with the drive system may be used to indicate the deck height.

As may be seen in figure 15, the cog 210 is supported by the screw jack 222, 223. In this way, the inner cylinder 223 of the screw jack may be wound into and out of the outer cylinder 222 by the height adjustment mechanism. The bottom or lower end of screw jack 222, 223 is held to the growing tray 200 by retaining plate 225, while the liner 203 is attached to the upper end of the screw jack by plates 221 and bolts 220. It will be appreciated that the arrangement is repeated at each of the corners of the tray/liner arrangement. In this way, the deck height of the liner 203 may be adjusted as required.

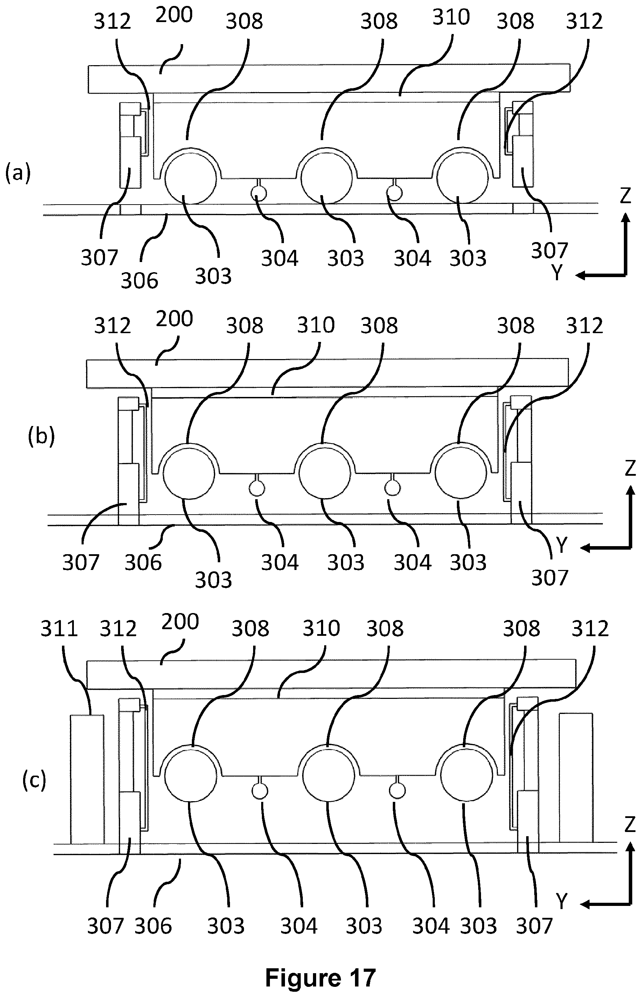

Figure 17-21 illustrate a load handing device 301 for use in the farming system. The load handing device 301 is used for lifting and depositing growing trays 200 in locations within the system. Further, the load handing device 301 is used to transport growing trays 200 between locations. The load handling device 301 may further be used to adjust the height of a liner within a growing tray 200.

Figure 17 illustrates a plan view of a long side, or y-z side, of a load handling device, with a growing tray resting on the lifting pad, in various configurations. In figure 17a the y-direction wheels 303 are deployed with the x-direction wheels held in a raised position, for forward and reverse movement in the y-direction. Typically, load handling devices will transit in y-direction in the configuration shown in figure 17a.

In figure 17b the x-direction wheels 307 wheels are deployed, with the y-direction wheel held in a raised position, for forward and reverse movement in the x-direction. Typically, load handling devices will transit in x-direction in the configuration shown in figure 17b. Although the tray support pad 308 is slightly raised in the configuration shown in figure 17b compared to the configuration shown in figure 17a, the bottom of the growing tray 200, if carried, is still below the top of the trestles.

In this way, when carrying a growing tray 200 the load handling device may move along any unobstructed pathway along the track network 306 - typically access aisles where no trestles are present. For example, to leave the growing tray 200 in a location having trestles such as a temporary storage location or a growing booth location, or to retrieve a growing tray 200 to transfer the growing tray to a new location.

If a load handling device is in transit without carrying or supporting a growing tray 200, then it the load handling device may move along any pathway along the track network 306, in some cases beneath growing trays resting on trestles.

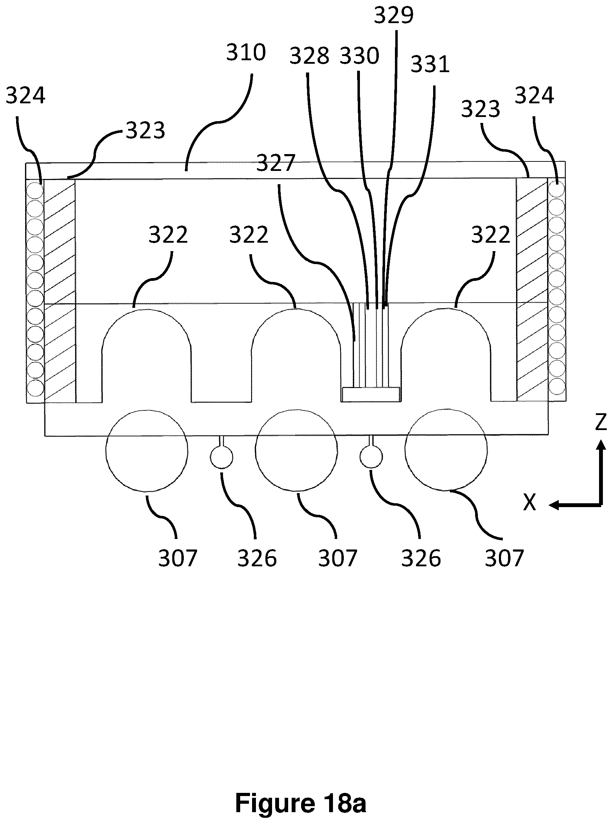

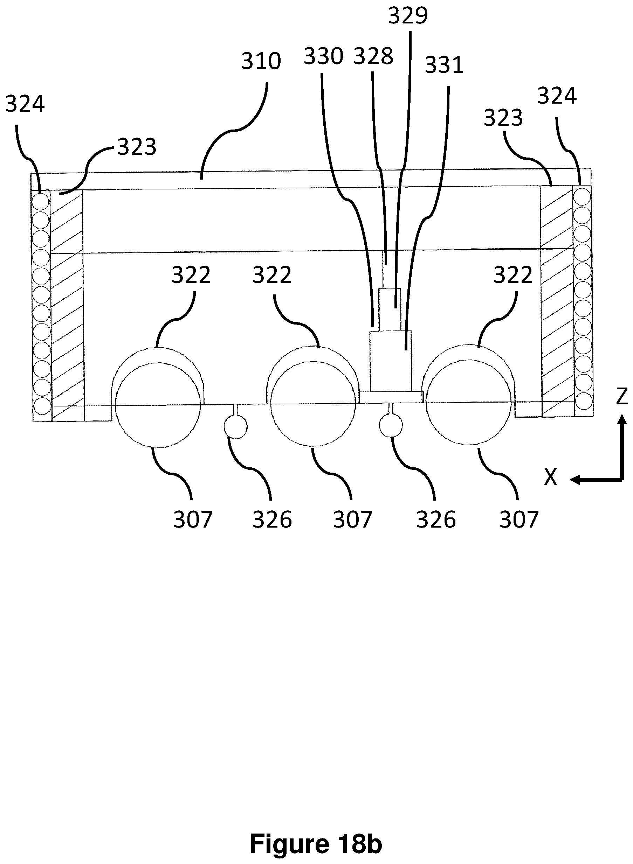

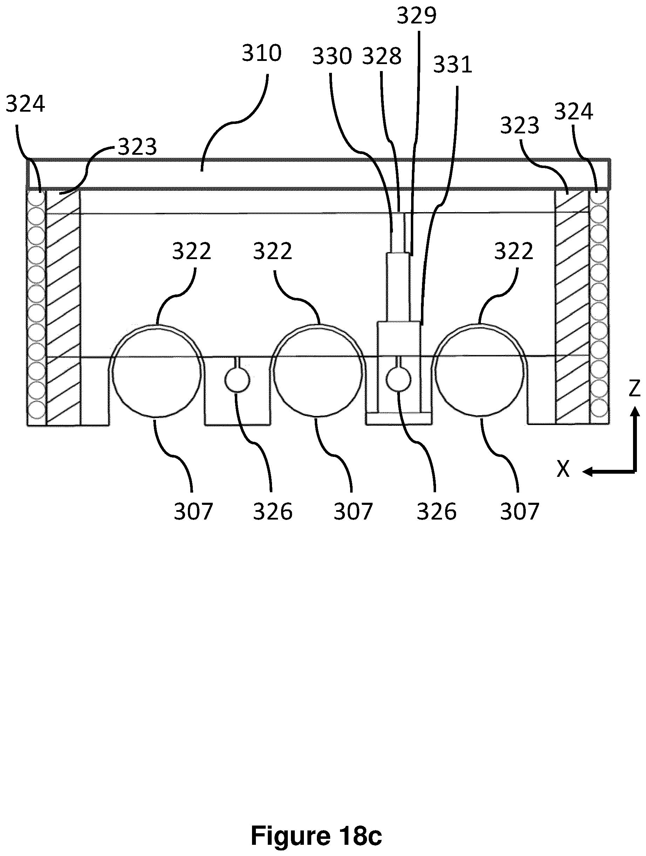

Figure 17c shows the load handling device 301 of figures 17a and 17b, between a pair of trestles 311. In this configuration, the support pad 310 and tray 200 are raised so that the bottom of the tray 200 is above the top of the trestles 311. In the configuration shown in figure 17c, the load handling device 301 can either move on to the next location, or lower the tray 200 on to the trestles 311 before moving away to the next task. How the support pad 310 moves from lowered and raised positions is discussed in more detail below, in connection with figure 18.

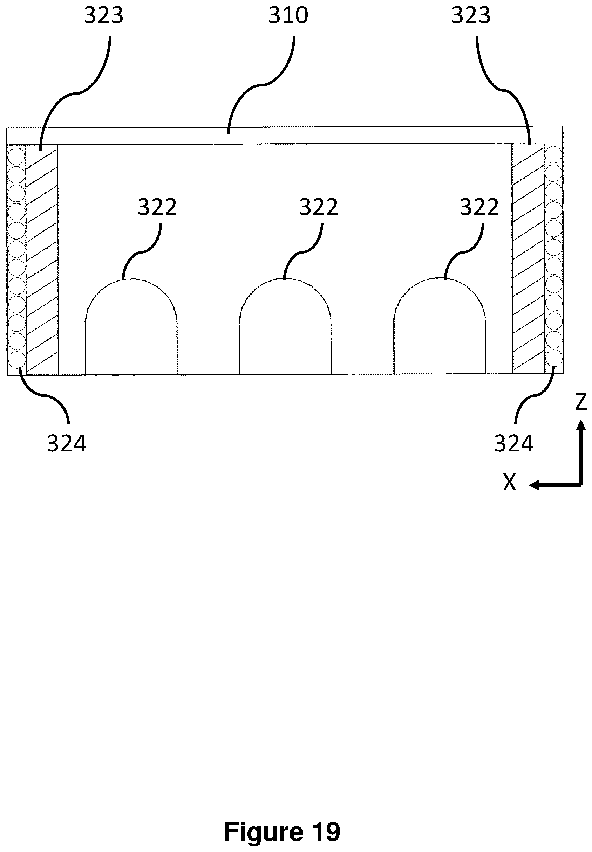

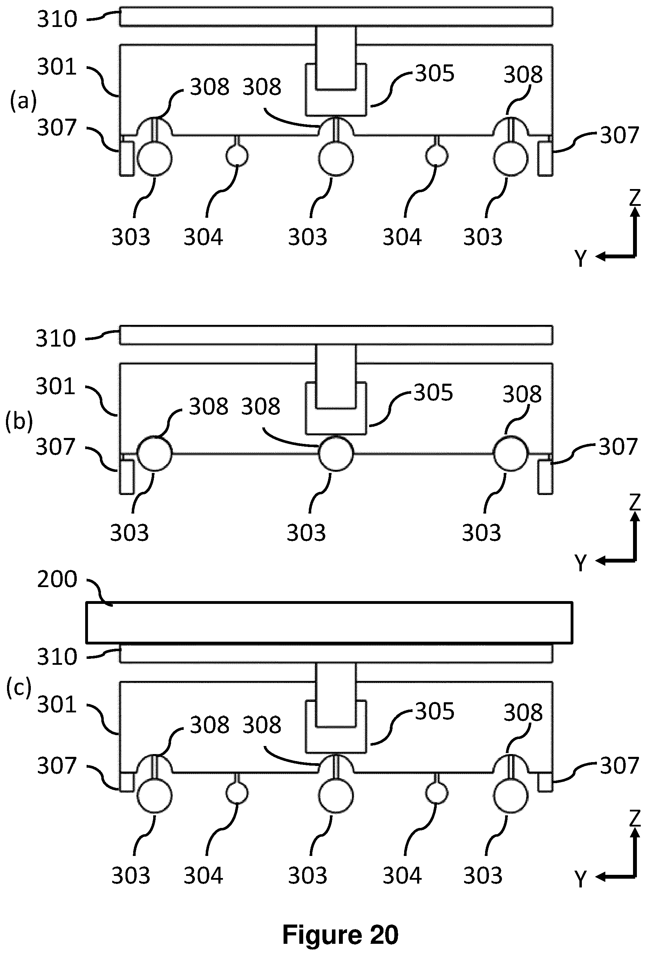

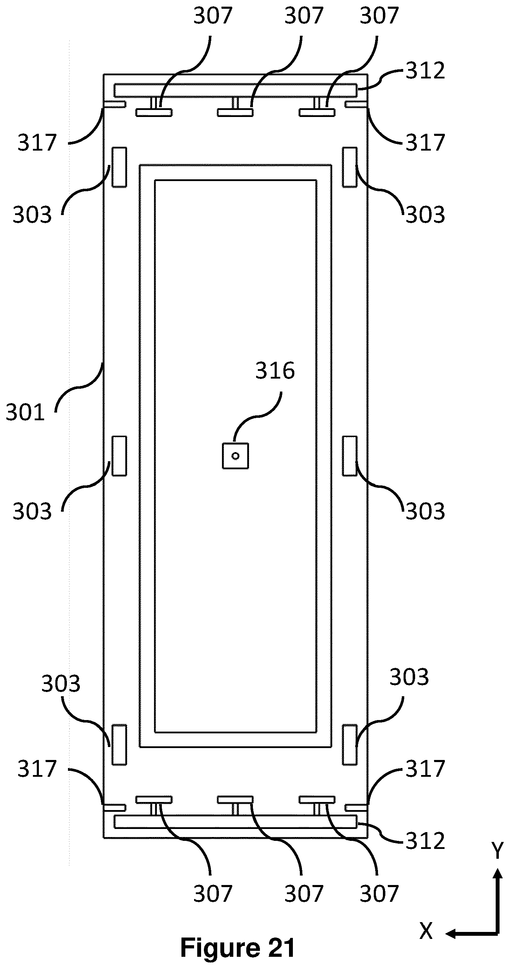

Figure 18 illustrates an elevation view of the short side, or x-z side, of the load handing device 301 without a growing tray 200, and showing the lifting pad 310 and mechanism in more detail. Figure 19 illustrates an elevation view of a short side, or x-z side, of the load handing device with the moving sub chassis removed. Figure 20 illustrates an elevation view of the long side, or y-z side, of an alternate load handling device design where the lift of load (tray) support pad to clear the trestles is accomplished with a third electric or hydraulic ram (305), which is independent from the two direction change mechanism rams. Figure 21 illustrates a plan view of the underside, x-y, of the load handling device.

As shown in figure 18, a ram mounting 327 is mounted to the load handling device chassis. The ram 331 illustrated comprises a first stage 329 and a second stage 330, nested within the first stage 329. It will be appreciated that the ram 331 is of a telescoping type. The upper extremity of the second stage 330 is mounted to a sub-chassis 312. In this way, the sub-chassis 312 may move up and down with the ram 331. The sub-chassis 312 is contained within a retaining flange 317, 323 and guided with needle or roller bearing 324, shown in figures 18 and 19.

In figure 18a, the ram 331 is fully compressed or nested and the wheels 307 are in an x-direction drive position, and the support pad 310 is at the maximum height. In figure 18b, the ram 331 is partially expanded or raised, and the wheels 307 are in a drive position, and the support pad 310 is at the minimum height for x-direction drive. In figure 18c, the ram 331 is fully extended and the wheels 307 are in a raised position (for y-direction drive by the wheels 303). In this way, the same mechanism is used to raise and lower the support pad 310 and control the x-y direction of the load handling device 301.

One or more displacement sensors 304, 326 may monitor the distance travelled by the load handling device in the y- and x- directions respectively.

Figure 21 illustrates a plan view of the bottom of a load handling device 301. As may be seen, wheels 303 are arranged along the along the long sides of the device 301 for y-direction travel, and wheels 307 are arranged along the short sides of the device attached to the sub-chassis 312 held within the retaining frame 317. At the centre of the device 301 a camera 316 is positioned for monitoring the positioning and travel of the device 301.

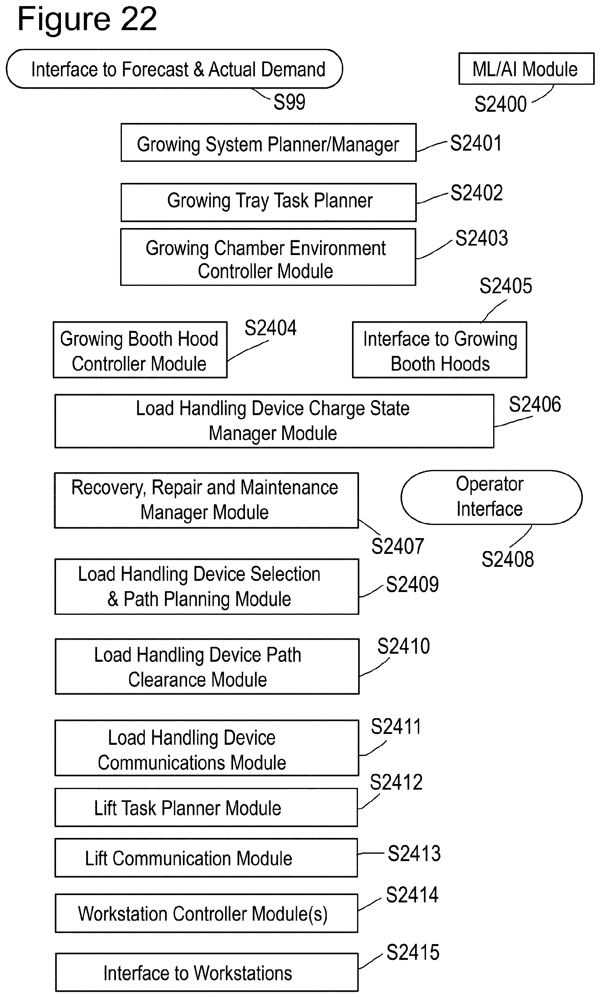

Figure 22 is a schematic diagram of a controller for the farming system. As noted above, the controller or control facility may comprise a number of software programs running on separate computing devices, interlinked by communication facilities. Any suitable architecture is anticipated as would be well understood by a person skilled in the art. Accordingly, the controller is shown as a number of separate modules.

S99 shows an Interface to Forecast & Actual Demand, to allow an operator or interfaced order management system to input desired outcomes of the system to be communicated to other modules of the system.

S2800 shows a ML/AI (machine learning or Artificial Intelligence) Module, to provide improvements and feedback to the system based on input data and data collated over time.

S2801 shows a Growing System Planner/Manager, to collectively manage the components of the farming system, to plan tasks to work towards desired outcomes of the system and to send instructions to other modules.

S2802 shows a Growing Tray Task Manager, to plan and send instructions to load handling devices, workstations and booths to manage a crop in a growing tray.

S2803 shows a Growing Chamber Environment Controller Module to manage and control environmental parameters in aisles, on a growing floor and within chambers.

S2804 shows a Growing Booth Hood Controller Module to manage and control a hood or cohort of hoods.

S2805 shows an Interface to Growing Booth Hoods to manage communications and instructions from other modules to and from the booth and or Booth Hood Controller Module.

S2806 shows a Load Handling Device Charge State Manager Module, to schedule load handling devices visits charge points when necessary, to ensure that load handling devices are not re-tasked before they have adequate charge from the charge points, and to ensure the load handling devices are not selected to undertake a task for which they do not have adequate battery or supercapacitor charge.

S2807 shows a Recovery, Repair and Maintenance Manager Module, to manage the operational capability of the fleet of load handling devices and manage necessarily work to maintain functionality.

S2808 shows an Operator Interface, for users to link to components of the system to provide inputs for desired operations, data, and feedback to the operator.

S2809 shows a Load Handling Device Selection & Path Planning Module, to plan routes for load handling devices to complete tasks.

S2810 shows a Load Handling Device Path Clearance Module, to prevent collisions between load handling devices as a result of electomechanical failures of the load handling devices, communication failures with load handling device, or failures of load handling devices to maintain planned physics profile.

S2811 shows a Load Handling Device Communication Module, for receiving instructions from other modules and for transmitting data to other modules.

S2812 shows a Lift Task Planner Module, for providing capability to move load handling devices between floors.

52813 shows a Lift communication Module, for receiving instructions from other modules and for transmitting data to other modules,

S2814 shows a Workstation Controller Module(s), for planning an executing tasks to process tray and crops.

S2815 shows an Interface To Workstations, to allow for user input and communication from the system to operators working at workstations.

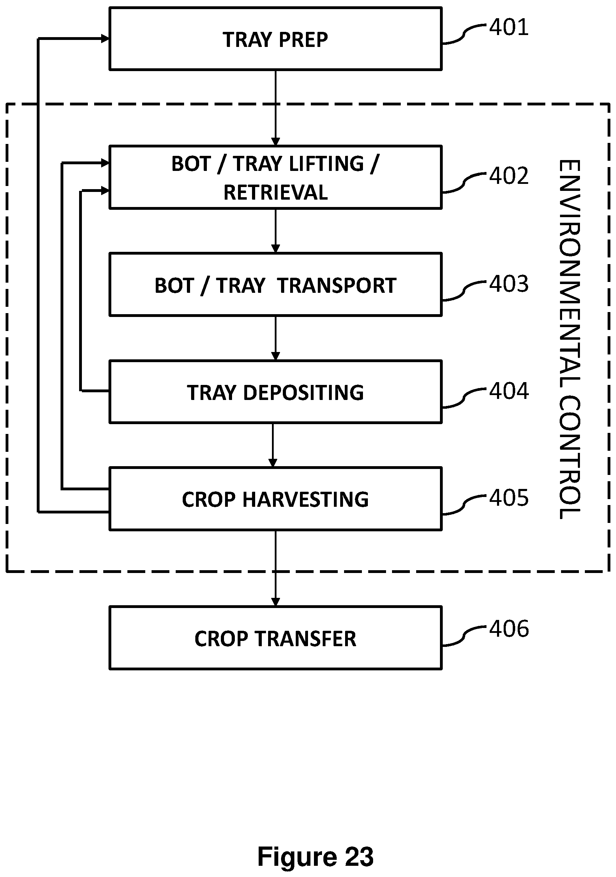

Figure 23 illustrates a method of using the farming system.

At step 401 growing trays are prepared at a workstation with seeds or seedlings. Tray preparation may comprise washing and inserting tray liners. Once prepared trays may be transferred to a controlled environment area 407, such as a high care or clean area, of the system. The prepared tray then remains within the control environment area 407 until after the crop is harvested and no longer in use.

At step 402 growing trays are lifted or retrieved from the preparation area, and transferred (at step 403) to the next location within the system by a load handling device, as instructed by the control facility. The load handling device then deposits the tray in a location, such as a growing booth or work station at step 404. Septs 402, 403 and 404 may be repeated through the growing cycle of the crop as required by the control facility.

When the crop has matured, the growing tray is transferred to a crop harvesting workstation at step 405. After harvesting, the crop may be returned or kept in the controlled environment 407 to continue growing, for example for a second crop from the same tray, or the harvested crop may be transferred out of the controlled environment for onward use at step 406. If a second crop may be produced from the plants in the growing tray, then steps 402, 403, 404 and 405 are repeated. If the crop is exhausted then the growing tray is returned to the tray preparation area and the tray is prepared to receive a new crop at step 401.

### Further comments

It will be appreciated that, the farming system and growing facility described herein provides a moderate to high density growing and storage facility. Accordingly, the facility provides an efficient and cost effective use of land.

The vertical scalability of the facility is only limited by building technology or construction practices, rather than by the growing facility and system itself.

It will be appreciated that, advantageously, the storage arrangement is relatively simple in design, with minimal interaction or connectivity required between mechanical components. Accordingly, the growing facility may be relatively cheap, straight-forward and quick to construct. It may be possible to construct the facility within existing buildings, or within multi-function buildings.

It will be appreciated that the arrangement of booth, or storage arrangement, advantageously provides for random access to each of the growing trays while maintaining a relatively high density of storage.

It will be appreciated that the area of the facility dedicated to booths, and the depth of booths on growing aisles may be optimised based on the intended use.

It will be appreciated that the load handling devices are simple and accordingly may provide improvements in reliability compared with other systems.

It will be appreciated that the cost and or number of MHE requirement, or load handling devices, may be minimised by optimisation of the system's control facility.

It will be appreciated that control of temperature, humidity and wind speed on the basis of aisles or part of aisles e.g. galleries or chambers, may provide efficiencies and simplifications compared with control on the basis of growing tray-by-growing tray. Accordingly, a cost benefit may follow.

It will be appreciated that the irrigation, lighting and sensing provided by hoods above the growing trays by growing tray basis allow for customisation of the localised environment for specific trays. Advantageously, it will be appreciated that customisation allows the system to meet short-term fluctuation in demand.

Advantageously, it will be appreciated that they are no growing tray-to-growing tray service couplings required. The fluid ingress and fluid egress solution between the hood and growing tray is low-tech and does not require a fluid coupling. Further, the lighting, sensing and camera functions for monitoring and servicing crops are located in the hood and so the connections are substantially permanent and static.

Advantageously, the system readily supports full automation of all routine production tasks as the load handling devices provide conveyance through workstations; and workstation could be automated or robotic.

Within the system, fire suppression is easily engineered, and within storage areas firewalls are easily engineered, thereby improving the safety of the system.

The hydroponic growing system or farming system described above with reference to the figures allows control of the growing environment and thus reduces the risk of microbiological contamination. In addition, the modular nature of the system allows for efficient use of space and ready scalability. The length, width and height of the rack units can be chosen to fit the available space. Accordingly crop yields and growing times are improved, contamination is minimised, shelf life is improved and the environmental impact is minimised.

Whilst endeavouring in the foregoing specification to draw attention to those features of the invention believed to be of particular importance, it should be understood that the applicant claims protection in respect of any patentable feature or combination of features referred to herein, and/or shown in the drawings, whether or not particular emphasis has been placed thereon.

It will be appreciated that a farming system, method and devices can be designed for a particular application using various combinations of devices and arrangements described above. It will be appreciated that the features described hereinabove may all be used together in a single system. In other embodiments of the invention, some of the features may be omitted. The features may be used in any compatible arrangement. Many variations and modifications not explicitly described above are possible without departing from the scope of the invention as defined in the appended claims.

In this document, the term "load handling device", "load handling device" and "bot" may be used interchangeably. The load handling device may be considered to be a tray handling device. The load handling device is a type of MHE or material handling equipment.

In this document, the language "movement relative to a gap" is intended to include movement within the gap, e.g. sliding along the gap, as well as movement into or out of a gap.

In this document, the language "movement in the n-direction" (and related wording), where n is one of *x, y* and z, is intended to mean movement substantially along or parallel to the n-axis, in either direction (i.e. towards the positive end of the n-axis or towards the negative end of the n-axis).

In this document, the word "connect" and its derivatives are intended to include the possibilities of direct and indirection connection. For example, "x is connected to y" is intended to include the possibility that x is directly connected to y, with no intervening components, and the possibility that x is indirectly connected to y, with one or more intervening components. Where a direct connection is intended, the words "directly connected", "direct connection" or similar will be used. Similarly, the word "support" and its derivatives are intended to include the possibilities of direct and indirect contact. For example, "x supports *y*" is intended to include the possibility that x directly supports and directly contacts *y,* with no intervening components, and the possibility that x indirectly supports *y,* with one or more intervening components contacting x and/or y.

In this document, the word "comprise" and its derivatives are intended to have an inclusive rather than an exclusive meaning. For example, "x comprises *y*" is intended to include the possibilities that x includes one and only one y, multiple y's, or one or more y's and one or more other elements.

Where an exclusive meaning is intended, the language "x is composed of y" will be used, meaning that x includes only y and nothing else.

## Claims

1. A hood (100) for a farming system growing floor booth, wherein the hood is positionable substantially above a support means for receiving a growing tray (200), the hood comprising:
a lighting means (102);
a fluid outlet for providing irrigation to the growing tray, wherein the fluid outlet is configured to be raised and lowered with a mechanism; and
a fluid inlet for receiving re-circulated fluid from the growing tray, wherein the fluid inlet is configured to be raised and lowered with a mechanism.

2. A hood (100) according to any preceding claim, wherein the fluid outlet can be raised and lowered with a servomechanism, and/or
wherein the fluid inlet can be raised and lowered with a servo mechanism.

3. A hood (100) according to any preceding claim, comprising:
a sensing means (111, 112, 113, 115, 116);
a camera means (114);
a control facility;
communication means for receiving commands and or transmitting data; and/or connecting means for connecting to: fluid channels, data channels and or a power supply.

4. A hood (100) according to any preceding claim, wherein the lighting means (102) comprises frequency controllable energy efficient lighting means.

5. A hood (100) according to any preceding claim, wherein the fluid inlet comprises a filtration and recirculation means.

6. A hood (100) according to any preceding claim, wherein the hood is substantially static and set at a height depend on an intended crop in a growing tray (200).

7. A hood (100) according to any preceding claim, wherein the hood (100) is accessible from a maintenance area.

## Patentansprüche

1. Haube (100) für eine Anbaubodenkabine eines Landwirtschaftssystems, wobei die Haube im Wesentlichen über einem Stützmittel zum Aufnehmen einer Anbauschale (200) positionierbar ist, wobei die Haube Folgendes umfasst:
ein Beleuchtungsmittel (102);
einen Fluidauslass zum Bereitstellen von Bewässerung für die Anbauschale, wobei der Fluidauslass konfiguriert ist, um mit einem Mechanismus angehoben und abgesenkt zu werden; und
einen Fluideinlass zum Aufnehmen von rezirkuliertem Fluid von der Anbauschale, wobei der Fluideinlass konfiguriert ist, um mit einem Mechanismus angehoben und abgesenkt zu werden.

2. Haube (100) nach einem der vorhergehenden Ansprüche, wobei der Fluidauslass mit einem Servomechanismus angehoben und abgesenkt werden kann, und/oder
wobei der Fluideinlass mit einem Servomechanismus angehoben und abgesenkt werden kann.

3. Haube (100) nach einem der vorhergehenden Ansprüche, umfassend:
ein Erfassungsmittel (111, 112, 113, 115, 116);
ein Kameramittel (114);
eine Steuereinrichtung;
ein Kommunikationsmittel zum Empfangen von Befehlen und/oder Übertragen von Daten; und/oder
ein Verbindungsmittel zum Verbinden mit: Fluidkanälen, Datenkanälen und/oder einer Stromversorgung.

4. Haube (100) nach einem der vorhergehenden Ansprüche, wobei das Beleuchtungsmittel (102) frequenzsteuerbare energieeffiziente Beleuchtungsmittel umfasst.

5. Haube (100) nach einem der vorhergehenden Ansprüche, wobei der Fluideinlass ein Filtrations- und Rezirkulationsmittel umfasst.

6. Haube (100) nach einem der vorhergehenden Ansprüche, wobei die Haube im Wesentlichen statisch ist und in Abhängigkeit von einer beabsichtigten Ernte in einer Anbauschale (200) auf eine Höhe eingestellt ist.

7. Haube (100) nach einem der vorhergehenden Ansprüche, wobei die Haube (100) von einem Wartungsbereich aus zugänglich ist.

## Revendications

1. Capot (100) pour une cabine de plancher de culture de système agricole, dans lequel le capot peut être positionné sensiblement au-dessus d'un moyen de support pour recevoir un plateau de culture (200), le capot comprenant :
un moyen d'éclairage (102) ;
une sortie de fluide pour fournir une irrigation au plateau de culture, dans lequel la sortie de fluide est configurée pour être levée et abaissée à l'aide d'un mécanisme ; et
une entrée de fluide pour recevoir du fluide remis en circulation à partir du plateau de culture, dans lequel l'entrée de fluide est configurée pour être levée et abaissée à l'aide d'un mécanisme.

2. Capot (100) selon l'une quelconque des revendications précédentes, dans lequel la sortie de fluide peut être levée et abaissée à l'aide d'un servomécanisme, et/ou
dans lequel l'entrée de fluide peut être levée et abaissée à l'aide d'un servomécanisme.

3. Capot (100) selon l'une quelconque des revendications précédentes, comprenant :
un moyen de détection (111, 112, 113, 115, 116) ;
un moyen de caméra (114) ;
une installation de commande ;
un moyen de communication pour recevoir des instructions et/ou transmettre des données ; et/ou
un moyen de connexion pour se connecter à : des canaux de fluide, des canaux de données et/ou une alimentation électrique.

4. Capot (100) selon l'une quelconque des revendications précédentes, dans lequel le moyen d'éclairage (102) comprend un moyen d'éclairage à efficacité énergétique pouvant être commandée en fréquence.

5. Capot (100) selon l'une quelconque des revendications précédentes, dans lequel l'entrée de fluide comprend un moyen de filtration et de remise en circulation.

6. Capot (100) selon l'une quelconque des revendications précédentes, dans lequel le capot est sensiblement statique et fixé à une hauteur qui dépend d'une culture prévue dans un plateau de culture (200).

7. Capot (100) selon l'une quelconque des revendications précédentes, dans lequel le capot (100) est accessible depuis une zone d'entretien.
